(19) Europäisches Patentamt
European Patent Office
Office européen des brevets

(11) **EP 4 622 189 A1**

(12) **EUROPEAN PATENT APPLICATION**
published in accordance with Art. 153(4) EPC

(43) Date of publication:
**24.09.2025  Bulletin 2025/39**

(21) Application number: **22967559.0**

(22) Date of filing: **07.12.2022**

(51) International Patent Classification (IPC):
*H04L 25/03* (2006.01)

(52) Cooperative Patent Classification (CPC):
**H04L 25/03**

(86) International application number:
**PCT/CN2022/137221**

(87) International publication number:
**WO 2024/119399 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **ZHANG, Gongzheng
Shenzhen, Guangdong 518129 (CN)**
• **DAI, Shengchen
Shenzhen, Guangdong 518129 (CN)**
• **WANG, Jian
Shenzhen, Guangdong 518129 (CN)**
• **XU, Chen
Shenzhen, Guangdong 518129 (CN)**
• **LI, Rong
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD, MODEL TRAINING METHOD, AND CORRESPONDING DEVICE**

(57)    This application discloses a communication method, including: A first apparatus determines a first adjustment model based on first information from a second apparatus, where the first adjustment model is associated with information about a first transmitter and information about a second receiver (602), or the first adjustment model is associated with information about a first receiver and information about a second transmitter (612), the first transmitter and the first receiver correspond to the first apparatus, and the second receiver and the second transmitter correspond to the second apparatus; and the first apparatus communicates with the second receiver of the second apparatus based on the first transmitter and the first adjustment model (603); or the first apparatus communicates with the second transmitter of the second apparatus based on the first receiver and the first adjustment model (613). In the technical solutions of this application, even if the first transmitter and the second receiver, or the first receiver and the second transmitter are from different vendors, and are not jointly trained, communication between the first apparatus and the second apparatus can be implemented by using the first adjustment model.

FIG. 3A

**Description**

## TECHNICAL FIELD

This application relates to the field of communication technologies, and specifically, to a communication method, a model training method, and a corresponding apparatus.

## BACKGROUND

A neural network-based transmitter and receiver may be configured to perform physical layer signal processing, for example, symbol modulation and demodulation, channel encoding and decoding, pilot and channel estimation, and compression and reconstruction of channel state information.

A neural network of the transmitter and a neural network of the receiver are usually optimized jointly for optimal performance. However, when different vendors or devices need to communicate with each other, a transmitter/receiver trained at one end needs to adapt to a receiver/transmitter trained at the other end, but models of transmitters/receivers independently trained by the vendors cannot directly communicate with each other.

Therefore, how to implement communication between the transmitters and the receivers of the different vendors without disclosing the models of the transmitters/receivers of the vendors becomes an urgent problem to be resolved.

## SUMMARY

This application provides a communication method, to enable transmitters and receivers of different vendors to communicate with each other by using an adjustment model. This application further provides a model training method, a corresponding communication apparatus, a computer-readable storage medium, a computer program product, and the like.

A first aspect of this application provides a communication method, including: A first apparatus determines a first adjustment model based on first information from a second apparatus, where the first adjustment model is associated with information about a first transmitter and information about a second receiver, or the first adjustment model is associated with information about a first receiver and information about a second transmitter, the first transmitter and the first receiver correspond to the first apparatus, and the second receiver and the second transmitter correspond to the second apparatus; and the first apparatus communicates with the second receiver of the second apparatus based on the first transmitter and the first adjustment model; or the first apparatus communicates with the second transmitter of the second apparatus based on the first receiver and the first adjustment model.

In this application, the first apparatus and the second apparatus may be devices, or may be chips (systems) in the devices. When the first apparatus or the second apparatus is the device, the first apparatus may be a terminal device, and the second apparatus may be a network device or a terminal device; or the first apparatus may be a network device, and the second apparatus may be a terminal device or a network device. When the first apparatus or the second apparatus is the chip (system), the first apparatus may be a chip (system) in a terminal device, and the second apparatus may be a chip (system) in a network device or the terminal device; or the first apparatus may be a chip (system) in a network device, and the second apparatus may be a chip (system) in a terminal device or the network device.

In this application, the first information may be an identifier of the first adjustment model or association information that may be used to determine the first adjustment model. The first adjustment model may be disposed in the first apparatus in a form of a module/unit, or may be disposed independently of the first apparatus.

In this application, the first adjustment model may correspond to the first transmitter, or may correspond to the first receiver, and a first adjustment model corresponding to the first transmitter may be different from a first adjustment model corresponding to the first receiver.

In this application, information about the first transmitter may be an identifier of the first transmitter or other information that may indicate the first transmitter. That the first adjustment model is associated with the information about the first transmitter and the information about the second receiver means that the first adjustment model may be determined (for example, found or obtained through calculation) by using the information about the first transmitter and the information about the second receiver. Similarly, that the first adjustment model is associated with the information about the first receiver and the information about the second transmitter means that the first adjustment model may be determined (for example, found or obtained through calculation) by using the information about the first receiver and the information about the second transmitter.

In this application, a function of the first transmitter/the second transmitter may be relative to a function of the first receiver/the second receiver. For example, the first transmitter/the second transmitter may include an encoder, and the first receiver/the second receiver may include a decoder; or the first transmitter/the second transmitter may include a modulator, and the first receiver/the second receiver may include a demodulator; or the first transmitter/the second transmitter may include a compression unit, and the first receiver/the second receiver may include a decompression unit.

In this application, if the first apparatus is the terminal device or the network device, that the first receiver and the first transmitter correspond to the first apparatus means that the first apparatus includes the first receiver and the first transmitter. If the first apparatus is the chip (system) in the terminal device or the chip (system) in the network device, that the first receiver and the first transmitter correspond to the first apparatus means that the first receiver, the first transmitter, and the first apparatus are disposed in a same device, for example, are all disposed in the terminal device or the network device.

In the first aspect, the first apparatus may determine the first adjustment model, and then communicate with the second receiver of the second apparatus based on the first transmitter and the first adjustment model, or communicate with the second transmitter of the second apparatus based on the first receiver and the first adjustment model. In this way, even if the first transmitter and the second receiver, or the first receiver and the second transmitter are from different vendors, and are not jointly trained, communication between the first apparatus and the second apparatus can also be implemented by using the first adjustment model.

In a possible implementation, that the first apparatus communicates with the second receiver of the second apparatus based on the first transmitter and the first adjustment model includes: The first apparatus processes a to-be-sent signal based on the first transmitter, and then processes, based on the first adjustment model, a signal processed by the first transmitter; and the first apparatus sends, to the second apparatus, a signal processed by the first adjustment model.

A signal in this application may also be expressed as data, a symbol, or a bit, and is essentially a data signal despite different expression manners.

In this possible implementation, after the first transmitter processes a to-be-sent signal ($x$), the first adjustment model processes a signal ($f1(x)$) processed by the first transmitter, and then sends a signal ($t1(f1(x))$) processed by the first adjustment model. $f1$ may represent the first transmitter, and $t1$ represents the first adjustment model. Because the second apparatus participates in training of the first adjustment model, the second receiver can correctly receive the signal processed by the first adjustment model, to implement effective communication between the first transmitter and the second receiver.

It should be noted that, that the first transmitter first processes the to-be-sent signal ($x$), and then the first adjustment model processes the signal ($f1(x)$) processed by the first transmitter is only a possible implementation. Alternatively, another processing sequence may be used. For example, the first adjustment model first processes the to-be-sent signal, and then the first transmitter processes the signal processed by the first adjustment model. This is not limited in this application.

In a possible implementation, that the first apparatus communicates with the second transmitter of the second apparatus based on the first receiver and the first adjustment model includes: The first apparatus processes a signal from the second transmitter of the second apparatus based on the first adjustment model; and the first apparatus processes, based on the first receiver, the signal processed by the first adjustment model.

In this possible implementation, the first adjustment model processes a signal ($f2(x)$) from the second transmitter of the second apparatus to obtain $t1(f2(x))$, and the first receiver processes $t1(f2(x))$ to obtain $g1(t1(f2(x)))$, where $g1$ represents the first receiver, and $f2$ represents the second transmitter. Because the second apparatus participates in training of the first adjustment model, the first receiver may correctly receive the signal processed by the first adjustment model, to implement effective communication between the second transmitter and the first receiver.

It should be noted that, that the first adjustment model first processes the signal ($f2(x)$) sent by the second transmitter, and then the first receiver processes the signal ($t1(f2(x))$) processed by the first adjustment model is only a possible implementation. Alternatively, another processing sequence may be used. For example, the first receiver first processes the signal sent by the second transmitter, and then the first adjustment model processes the signal processed by the first receiver. This is not limited in this application.

In a possible implementation, the first information includes the identifier of the first adjustment model, and the identifier of the first adjustment model is used to determine the first adjustment model.

In this possible implementation, if the second apparatus has determined the identifier of the first adjustment model that communicates with the first apparatus, the second apparatus may feed back the identifier of the first adjustment model to the first apparatus, so that the first apparatus quickly determines the first adjustment model.

In a possible implementation, the first information includes an identifier of the second receiver or an identifier of the second transmitter; and the identifier of the second receiver or the identifier of the second transmitter is used to determine the identifier of the first adjustment model.

In this possible implementation, if the second apparatus feeds back, to the first apparatus, the identifier of the second receiver that communicates with the first transmitter, the first apparatus needs to search for the identifier of the first adjustment model based on the identifier of the first transmitter and the identifier of the second receiver, to determine the first adjustment model. If the second apparatus feeds back, to the first apparatus, the identifier of the second transmitter that communicates with the first receiver, the first apparatus needs to search for the identifier of the first adjustment model based on an identifier of the first receiver and the identifier of the second transmitter, to determine the first adjustment model. In this manner, diversity of a feedback form of the first information is increased.

In a possible implementation, the identifier of the first adjustment model is determined by the first apparatus from a first identifier group based on the identifier of the first transmitter and the identifier of the second receiver, and the first identifier group includes the identifier of the first transmitter, the identifier of the second receiver, and the identifier of the first adjustment model; or the identifier of the first adjustment model is determined by the first apparatus from a second identifier group based on the identifier of the first receiver and the identifier of the second transmitter, and the second identifier group includes the identifier of the second transmitter, the identifier of the first receiver, and the identifier of the first adjustment model.

In this possible implementation, both the first apparatus and the second apparatus may maintain the first identifier group and the second identifier group, and both the first identifier group and the second identifier group may maintain three identifiers. For example, an identifier group (Tx01, M01, and Re02) indicates that an identifier of the first adjustment model that is related to communication between a transmitter whose identifier is Tx01 and a receiver whose identifier is Re02 is M01. Both the first apparatus and the second apparatus can quickly find, by using the identifier group, an adjustment model that should be used for communication between a transmitter and a receiver that correspond to the two apparatuses, to improve communication efficiency.

In a possible implementation, before that the first apparatus determines the first adjustment model based on the first information from the second apparatus, the method further includes: The first apparatus trains a neural network model based on a first training target to obtain the first adjustment model, where the first training target indicates to reduce an error between a first signal and a second signal, the first signal is a signal obtained by the neural network model that participates in training by processing a signal obtained by the first transmitter by processing a third signal, the second signal is a signal obtained by the second transmitter by processing the third signal, and the third signal is a source signal.

In this possible implementation, a source signal (x) may be understood as a signal that is not processed by the first transmitter and the first adjustment model. The source signal (x) may be provided by the first apparatus, or may be obtained in another manner. This is not limited in this application. The first signal is a signal (t1(f1(x))) obtained by the neural network model (the first adjustment model obtained before training is completed) that participates in training by processing a signal obtained through processing by the first transmitter, and the second signal is a signal (f2(x)) obtained by the second transmitter by processing the third signal. The first training target may be understood as making the first signal and the second signal as close as possible, or making the error between the first signal and the second signal as small as possible. To be specific, the signal (t1(f1(x))) obtained through joint processing by the first transmitter and the first adjustment model can be as close as possible to the signal (f2(x)) obtained by the second transmitter by processing the same source signal. Because the second receiver and the second transmitter are usually jointly trained, the second receiver can correctly receive data processed by the second transmitter. If t1(f1(x)) is as close as possible to f2(x), the second receiver can also correctly receive t1(f1(x)). Therefore, the first apparatus and the second apparatus can normally communicate with each other through the training process.

In a possible implementation, before that the first apparatus determines the first adjustment model based on the first information from the second apparatus, the method further includes: The first apparatus trains a neural network model based on a second training target to obtain the first adjustment model, where the second training target indicates to reduce, based on a fourth signal, a loss function of the neural network model that participates in training, the fourth signal is a signal obtained by the second receiver by processing a fifth signal, the fifth signal is a signal obtained by the neural network model that participates in training by processing a signal obtained by the first transmitter by processing a sixth signal, and the sixth signal is a source signal.

In this possible implementation, a source signal (x) may be understood as a signal that is not processed by the first transmitter and the first adjustment model. The source signal (x) may be provided by the first apparatus, or may be obtained in another manner. This is not limited in this application. The fifth signal is a signal (t1(f1(x))) obtained by the first adjustment model by processing a signal obtained by the first transmitter by processing the source signal (x). The fourth signal is a signal obtained by the second receiver by processing the fifth signal (t1(f1(x))). The processing process may include: first performing processing such as decoding and demodulation on the fifth signal (t1(f1(x))) to obtain g2(t1(f1(x))), then calculating a loss function L, for example, a mean square error (mean square error, mse) (x, g2(t1(f1(x)))) or a cross entropy (cross entropy, CE) (x, g2(t1(f1(x)))), for g2(t1(f1(x))), and performing derivation to obtain a gradient $\partial L / \partial t1(f_1(x))$, where g2 may represent the second receiver. The second training target may be understood as that the first apparatus adjusts, based on the gradient fed back by the second apparatus, a weight of the neural network model that participates in training, so that the loss function is as small as possible. In this way, the first adjustment model obtained through training can enable the first transmitter and the second receiver to normally communicate with each other.

Both the first training target and the second training target are used for training in a scenario in which the neural network model corresponds to the first transmitter, and the first adjustment model is represented by t1.

In a possible implementation, before that the first apparatus determines the first adjustment model based on the first information from the second apparatus, the method further includes: The first apparatus trains a neural network model based on a third training target to obtain the first adjustment model, where the third training target indicates to reduce an error between a seventh signal and an eighth signal, the seventh signal is a signal obtained by the first receiver by processing a signal obtained by the neural network model that participates in training by processing a ninth signal, the ninth signal is obtained by the second transmitter by processing a source signal, and the eighth signal is the source signal or is obtained by the second receiver by processing the ninth signal.

In this possible implementation, a source signal (x) may be understood as a signal that is not processed by the second transmitter. The source signal (x) may be provided by the second apparatus, or may be obtained in another manner. This is not limited in this application. The ninth signal is a signal (f2(x)) obtained by the second transmitter by processing the source signal (x), the seventh signal is a signal (g1(t1(f2(x)))) obtained by the first receiver by processing a signal (t1(f2(x))) obtained by the first adjustment model by processing the ninth signal, and the eighth signal is the source signal or is obtained by the second receiver by processing the ninth signal. The third training target may be understood as that the seventh signal is as close as possible to the eighth signal, or the error between the seventh signal and the eighth signal is as small as possible. To be specific, the signal (g1(t1(f2(x)))) obtained through joint processing by the first adjustment model and the first receiver can be as close as possible to the source signal (x) or the signal (g2(f2(x))) obtained by the second receiver by processing the signal (f2(x)). In this way, a result obtained by the first adjustment model and the first receiver by jointly processing the signal (f2(x)) encoded or modulated by the second transmitter is basically consistent with the signal (x) that is not encoded or modulated by the second transmitter or a result (g2(f2(x))) obtained by the second receiver by processing the signal (f2(x)). Because the second receiver and the second transmitter are usually jointly trained, the second receiver can correctly receive data processed by the second transmitter. If g1(t1(f2(x))) is as close as possible to x or g2(f2(x)), the first receiver can also correctly receive the signal (f2(x)) sent by the second transmitter. Therefore, the first apparatus and the second apparatus can normally communicate with each other through the training process.

It should be noted that, the first adjustment model in this possible implementation corresponds to the first receiver, and is represented by t2.

In a possible implementation, the method further includes: The first apparatus sends the first adjustment model to the second apparatus, where the first adjustment model is used by the second apparatus to determine a second adjustment model used for the second transmitter.

In this possible implementation, the first apparatus obtains the first adjustment model after performing the training process of the first training target or the second training target for a plurality of times, and may send the first adjustment model to the second apparatus, so that the second apparatus derives the second adjustment model applicable to the second transmitter. In this way, the second apparatus does not need to train an adjustment model applicable to the second transmitter, to reduce a calculation amount and improve communication efficiency.

In a possible implementation, a neural network of the second adjustment model is an inverse neural network of a neural network of the first adjustment model.

In this possible implementation, the second adjustment model and the first adjustment model are inverse neural networks of each other. In this way, overheads of obtaining the second adjustment model can be reduced.

In a possible implementation, the method further includes: The first apparatus sends the first adjustment model to the second apparatus, where the first adjustment model is used by the second apparatus to determine a third adjustment model used for the second receiver.

In this possible implementation, after training, by using the third training target, the first adjustment model applicable to the first receiver, the first apparatus may send the first adjustment model to the second apparatus, so that the second apparatus can derive, by using the first adjustment model, the third adjustment model applicable to the second receiver. In this way, the second apparatus does not need to train an adjustment model applicable to the second receiver, to reduce a calculation amount and improve communication efficiency.

In a possible implementation, a neural network of the third adjustment model is an inverse neural network of a neural network of the first adjustment model.

In this possible implementation, the third adjustment model and the first adjustment model are inverse neural networks of each other. In this way, overheads of obtaining the third adjustment model can be reduced.

In a possible implementation, if there are a plurality of first adjustment models, and the plurality of first adjustment models are connected in parallel, each of the first adjustment models that are connected in parallel is used by the first transmitter to communicate with a different second receiver; or each of the first adjustment models that are connected in parallel is used by the first receiver to communicate with a different second transmitter.

In this possible implementation, there may be a plurality of first adjustment models that are connected in parallel. In this way, the first transmitter or the first receiver may communicate with different second receivers or second transmitters by using different first adjustment models, to improve communication flexibility.

In a possible implementation, if there are a plurality of first adjustment models, and the plurality of first adjustment models are connected in series, at least two first adjustment models that are directly connected and that are connected in series are used by the first transmitter to communicate with different second receivers; or at least two first adjustment models that are directly connected and that are connected in series are used by the first receiver to communicate with different second transmitters.

In this possible implementation, there may be a plurality of first adjustment models that are connected in series. In this way, the first transmitter or the first receiver may communicate with different second receivers or second transmitters by using one or more first adjustment models, to improve communication flexibility.

A second aspect of this application provides a model training method, including: A first apparatus obtains a signal used for model training, where the signal used for model training includes a first signal and a second signal, the first signal is a signal obtained by a neural network model that participates in training by processing a signal obtained by a first transmitter by processing a third signal, the second signal is a signal obtained by a second transmitter by processing the third signal, and the third signal is a source signal; and the first apparatus trains the neural network model based on a first training target to obtain a first adjustment model, where the first training target indicates to reduce an error between the first signal and the second signal.

In the second aspect, a source signal (x) may be understood as a signal that is not processed by the first transmitter and the neural network model that participates in training (the first adjustment model obtained before training is completed), the first signal is a signal (t1(f1(x))) obtained by the neural network model that participates in training by processing a signal obtained through processing by the first transmitter, and the second signal is a signal (f2(x)) obtained by the second transmitter by processing the third signal. The first training target may be understood as making the first signal and the second signal as close as possible, or making the error between the first signal and the second signal as small as possible. To be specific, the signal (t1(f1(x))) obtained through joint processing by the first transmitter and the first adjustment model can be as close as possible to the signal (f2(x)) obtained by the second transmitter by processing the same source signal. Because the second receiver and the second transmitter are usually jointly trained, the second receiver can correctly receive data processed by the second transmitter. If t1(f1(x)) is as close as possible to f2(x), the second receiver can also correctly receive t1(f1(x)). Therefore, the first apparatus and a second apparatus can normally communicate with each other through the training process.

In a possible implementation, the method further includes: The first apparatus sends the first adjustment model to the second apparatus, where the first adjustment model is used by the second apparatus to determine a second adjustment model used for the second transmitter.

In this possible implementation, the first apparatus obtains the first adjustment model after performing the training process of the first training target or the second training target for a plurality of times, and may send the first adjustment model to the second apparatus, so that the second apparatus derives the second adjustment model applicable to the second transmitter. In this way, the second apparatus does not need to train an adjustment model applicable to the second transmitter, to reduce a calculation amount and improve communication efficiency.

In a possible implementation, the method further includes: A neural network of the second adjustment model is an inverse neural network of a neural network of the first adjustment model.

In this possible implementation, the second adjustment model and the first adjustment model are inverse neural networks of each other. In this way, overheads of obtaining the second adjustment model can be reduced.

A third aspect of this application provides a model training method, including: A first apparatus obtains a signal used for model training, where the signal used for model training includes a fourth signal and a fifth signal, the fourth signal is a signal obtained by a second receiver by processing the fifth signal, the fifth signal is a signal obtained by a neural network model that participates in training by processing a signal obtained by a first transmitter by processing a sixth signal, and the sixth signal is a source signal; and the first apparatus trains the neural network model based on a second training target to obtain a first adjustment model, where the second training target indicates to reduce, based on the fourth signal, a loss function of the neural network model that participates in training.

In the third aspect, a source signal (x) may be understood as a signal that is not processed by the first transmitter and the first adjustment model. The fifth signal is a signal (t1(f1(x))) obtained by the first adjustment model by processing a signal obtained by the first transmitter by processing the source signal (x). The fourth signal is a signal obtained by the second receiver by processing the fifth signal (t1(f1(x))). The processing process may include: first performing processing such as decoding and demodulation on the fifth signal (t1(f1(x))) to obtain g2(t1(f1(x))), then calculating a loss function L, for example, mse(x, g2(t1(f1(x)))) or cross entropy CE(x, g2(t1(f1(x)))), for g2(t1(f1(x))), and performing derivation to obtain a gradient $\partial L/\partial t1(f_1(x))$, where g2 may represent the second receiver. The second training target may be understood as that the first apparatus adjusts, based on the gradient fed back by the second apparatus, a weight of the neural network model that participates in training, so that the loss function is as small as possible. In this way, the first adjustment model obtained through training can enable the first transmitter and the second receiver to normally communicate with each other.

In a possible implementation, the method further includes: The first apparatus sends the first adjustment model to the second apparatus, where the first adjustment model is used by the second apparatus to determine a second adjustment model used for a second transmitter.

In this possible implementation, the first apparatus obtains the first adjustment model after performing the training process of the first training target or the second training target for a plurality of times, and may send the first adjustment model to the second apparatus, so that the second apparatus derives the second adjustment model applicable to the second transmitter. In this way, the second apparatus does not need to train an adjustment model applicable to the second transmitter, to reduce a calculation amount and improve communication efficiency.

In a possible implementation, the method further includes: A neural network of the second adjustment model is an inverse neural network of a neural network of the first adjustment model.

In this possible implementation, the second adjustment model and the first adjustment model are inverse neural networks of each other. In this way, overheads of obtaining the second adjustment model can be reduced.

A fourth aspect of this application provides a model training method, including: A first apparatus obtains a signal used for model training, where the signal used for model training includes a seventh signal and an eighth signal, the seventh signal is a signal obtained by a first receiver by processing a signal obtained by a neural network model that participates in training by processing a ninth signal, the ninth signal is obtained by a second transmitter by processing a source signal, and the eighth signal is the source signal or is obtained by a second receiver by processing the ninth signal; and the first apparatus trains the neural network model based on a third training target to obtain a first adjustment model, where the third training target indicates to reduce an error between the seventh signal and the eighth signal.

In the fourth aspect, a source signal $(x)$ may be understood as a signal that is not processed by the second transmitter. The source signal $(x)$ may be provided by a second apparatus, or may be obtained in another manner. This is not limited in this application. The ninth signal is a signal $(f2(x))$ obtained by the second transmitter by processing the source signal $(x)$, the eighth signal is the source signal $(x)$ or a signal $(g2(f2(x)))$ obtained by the second receiver by processing the ninth signal, and the seventh signal is a signal $(g1(t1(f2(x))))$ obtained by the first receiver by processing a signal $(t1(f2(x)))$ obtained by a first adjustment model by processing the ninth signal. The third training target may be understood as that the seventh signal is as close as possible to the eighth signal, or the error between the seventh signal and the eighth signal is as small as possible. To be specific, the signal $(g1(t1(f2(x))))$ obtained through joint processing by the first adjustment model and the first receiver can be as close as possible to the source signal $(x)$ or the signal $(g2(f2(x)))$ obtained by the second receiver by processing the signal $(f2(x))$. In this way, a result obtained by the first adjustment model and the first receiver by jointly processing the signal $(f2(x))$ encoded or modulated by the second transmitter is basically consistent with the signal $(x)$ that is not encoded or modulated by the second transmitter or a result $(g2(f2(x)))$ obtained by the second receiver by processing the signal $(f2(x))$. Because the second receiver and the second transmitter are usually jointly trained, the second receiver can correctly receive data processed by the second transmitter. If $g1(t1(f2(x)))$ is as close as possible to $x$ or $g2(f2(x))$, the first receiver can also correctly receive the signal $(f2(x))$ sent by the second transmitter. Therefore, the first apparatus and the second apparatus can normally communicate with each other through the training process.

In a possible implementation, the first apparatus sends the first adjustment model to the second apparatus, where the first adjustment model is used by the second apparatus to determine a third adjustment model used for the second receiver.

In this possible implementation, after training, by using the third training target, the first adjustment model applicable to the first receiver, the first apparatus may send the first adjustment model to the second apparatus, so that the second apparatus can derive, by using the first adjustment model, the third adjustment model applicable to the second receiver. In this way, the second apparatus does not need to train an adjustment model applicable to the second receiver, to reduce a calculation amount and improve communication efficiency.

In a possible implementation, a neural network of the third adjustment model is an inverse neural network of a neural network of the first adjustment model.

In this possible implementation, the third adjustment model and the first adjustment model are inverse neural networks of each other. In this way, overheads of obtaining the third adjustment model can be reduced.

A fifth aspect of this application provides a communication apparatus, including:
a processing module, configured to determine a first adjustment model based on first information from a second apparatus, where the first adjustment model is associated with information about a first transmitter and information about a second receiver, or the first adjustment model is associated with information about a first receiver and information about a second transmitter, the first transmitter and the first receiver correspond to the first apparatus, and the second receiver and the second transmitter correspond to the second apparatus.

The processing module is further configured to communicate with the second receiver of the second apparatus based on the first transmitter and the first adjustment model; or the first apparatus communicates with the second transmitter of the second apparatus based on the first receiver and the first adjustment model.

In a possible implementation, the processing module is specifically configured to process a to-be-sent signal based on the first transmitter, and then process, based on the first adjustment model, a signal processed by the first transmitter.

The communication apparatus further includes a transceiver module, configured to send a signal processed by the first adjustment model to the second apparatus. The transceiver module is a module having a transceiver function, and has functions of a transmitter and a receiver. The transceiver module may include the first transmitter and the first receiver, or the transceiver module includes modules on the first transmitter and the first receiver.

In a possible implementation, the processing module is specifically configured to process, based on the first adjustment model, a signal from the second transmitter of the second apparatus, and process, based on the first receiver, the signal processed by the first adjustment model.

In a possible implementation, the first information includes an identifier of the first adjustment model, and the identifier of the first adjustment model is used to determine the first adjustment model.

In a possible implementation, the first information includes an identifier of the second receiver or an identifier of the second transmitter; and the identifier of the second receiver or the identifier of the second transmitter is used to determine an identifier of the first adjustment model.

In a possible implementation, the identifier of the first adjustment model is determined by the first apparatus from a first identifier group based on the identifier of the first transmitter and the identifier of the second receiver, and the first identifier group includes the identifier of the first transmitter, the identifier of the second receiver, and the identifier of the first adjustment model; or the identifier of the first adjustment model is determined by the first apparatus from a second identifier group based on the identifier of the first receiver and the identifier of the second transmitter, and the second identifier group includes the identifier of the second transmitter, the identifier of the first receiver, and the identifier of the first adjustment model.

In a possible implementation, the processing module is further configured to train a neural network model based on a first training target to obtain the first adjustment model, where the first training target indicates to reduce an error between a first signal and a second signal, the first signal is a signal obtained by the neural network model that participates in training by processing a signal obtained by the first transmitter by processing a third signal, the second signal is a signal obtained by the second transmitter by processing the third signal, and the third signal is a source signal.

In a possible implementation, the processing module is further configured to train a neural network model based on a second training target to obtain the first adjustment model, where the second training target indicates to reduce, based on a fourth signal, a loss function of the neural network model that participates in training, the fourth signal is a signal obtained by the second receiver by processing a fifth signal, the fifth signal is a signal obtained by the neural network model that participates in training by processing a signal obtained by the first transmitter by processing a sixth signal, and the sixth signal is a source signal.

In a possible implementation, the processing module is further configured to train a neural network model based on a third training target to obtain the first adjustment model, where the third training target indicates to reduce an error between a seventh signal and an eighth signal, the seventh signal is a signal obtained by the first receiver by processing a signal obtained by the neural network model that participates in training by processing a ninth signal, the ninth signal is obtained by the second transmitter by processing a source signal, and the eighth signal is the source signal or is obtained by the second receiver by processing the ninth signal.

In a possible implementation, the transceiver module is further configured to send the first adjustment model to the second apparatus, where the first adjustment model is used by the second apparatus to determine a second adjustment model used for the second transmitter.

In a possible implementation, a neural network of the second adjustment model is an inverse neural network of a neural network of the first adjustment model.

In a possible implementation, the transceiver module is further configured to send the first adjustment model to the second apparatus, where the first adjustment model is used by the second apparatus to determine a third adjustment model used for the second receiver.

In a possible implementation, a neural network of the third adjustment model is an inverse neural network of a neural network of the first adjustment model.

In a possible implementation, if there are a plurality of first adjustment models, and the plurality of first adjustment models are connected in parallel, each of the first adjustment models that are connected in parallel is used by the first transmitter to communicate with a different second receiver; or each of the first adjustment models that are connected in parallel is used by the first receiver to communicate with a different second transmitter.

In a possible implementation, if there are a plurality of first adjustment models, and the plurality of first adjustment models are connected in series, at least two first adjustment models that are directly connected and that are connected in series are used by the first transmitter to communicate with different second receivers; or at least two first adjustment models that are directly connected and that are connected in series are used by the first receiver to communicate with different second transmitters.

A sixth aspect of this application provides a communication apparatus, including:

a processing module, configured to obtain a signal used for model training, where the signal used for model training includes a first signal and a second signal, the first signal is a signal obtained by a neural network model that participates in training by processing a signal obtained by a first transmitter by processing a third signal, the second signal is a signal obtained by a second transmitter by processing the third signal, and the third signal is a source signal; and train the neural network model based on a first training target to obtain a first adjustment model, where the first training target indicates to reduce an error between the first signal and the second signal.

In a possible implementation, the communication apparatus further includes a transceiver module, configured to send the first adjustment model to a second apparatus, where the first adjustment model is used by the second apparatus to determine a second adjustment model used for the second transmitter. The transceiver module is a module having a transceiver function, and has functions of a transmitter and a receiver. The transceiver module may include the first transmitter and the first receiver, or the transceiver module includes modules on the first transmitter and the first receiver.

In a possible implementation, a neural network of the second adjustment model is an inverse neural network of a neural network of the first adjustment model.

A seventh aspect of this application provides a communication apparatus, including:

a processing module, configured to obtain a signal used for model training, where the signal used for model training includes a fourth signal and a fifth signal, the fourth signal is a signal obtained by a second receiver by processing the fifth signal, the fifth signal is a signal obtained by a neural network model that participates in training by processing a signal obtained by a first transmitter by processing a sixth signal, and the sixth signal is a source signal; and train the neural network model based on a second training target to obtain a first adjustment model, where the second training target indicates to reduce, based on the fourth signal, a loss function of the neural network model that participates in training.

In a possible implementation, the communication apparatus further includes a transceiver module, configured to send the first adjustment model to the second apparatus, where the first adjustment model is used by the second apparatus to determine a second adjustment model used for the second transmitter. The transceiver module is a module having a transceiver function, and has functions of a transmitter and a receiver. The transceiver module may include the first transmitter and a first receiver, or the transceiver module includes modules on the first transmitter and the first receiver.

In a possible implementation, a neural network of the second adjustment model is an inverse neural network of a neural network of the first adjustment model.

An eighth aspect of this application provides a communication apparatus, including:

a processing module, configured to obtain a signal used for model training, where the signal used for model training includes a seventh signal and an eighth signal, the seventh signal is a signal obtained by a first receiver by processing a signal obtained by a neural network model that participates in training by processing a ninth signal, the ninth signal is obtained by a second transmitter by processing a source signal, and the eighth signal is the source signal or is obtained by a second receiver by processing the ninth signal; and train the neural network model based on a third training target to obtain a first adjustment model, where the third training target indicates to reduce an error between the seventh signal and the eighth signal.

In a possible implementation, the communication apparatus further includes a transceiver module, configured to send the first adjustment model to a second apparatus, where the first adjustment model is used by the second apparatus to determine a third adjustment model used for the second receiver. The transceiver module is a module having a transceiver function, and has functions of a transmitter and a receiver. The transceiver module may include a first transmitter and the first receiver, or the transceiver module includes modules on the first transmitter and the first receiver.

In a possible implementation, a neural network of the third adjustment model is an inverse neural network of a neural network of the first adjustment model.

The communication apparatus according to the fifth aspect to the eighth aspect may be a device or a chip (system) in the device. For example, the processing module may be a processor, and the transceiver module may be a transceiver or a communication interface. It may be understood that, the transceiver module may be a transceiver in the communication apparatus, for example, implemented by using an antenna, a feeder, and/or a codec in the communication apparatus. Alternatively, if the communication apparatus is the chip (system) disposed in the device, the transceiver module may be an input/output interface of the chip (system), for example, an input/output circuit or a pin.

A ninth aspect of this application provides a communication apparatus. The communication apparatus includes a processor. The processor is configured to invoke and run a computer program stored in a memory, to enable the processor to implement any one of the first aspect or the implementations of the first aspect.

Optionally, the communication apparatus further includes a transceiver. The processor is further configured to control the transceiver to send and receive a signal.

Optionally, the communication apparatus includes the memory. The memory stores the computer program.

A tenth aspect of this application provides a communication apparatus. The communication apparatus includes a processor. The processor is configured to invoke and run a computer program stored in a memory, to enable the processor to implement any one of the second aspect or the implementations of the second aspect.

Optionally, the communication apparatus further includes a transceiver. The processor is further configured to control the transceiver to send and receive a signal.

Optionally, the communication apparatus includes the memory. The memory stores the computer program.

An eleventh aspect of this application provides a communication apparatus. The communication apparatus includes a processor. The processor is configured to invoke and run a computer program stored in a memory, to enable the processor to implement any one of the third aspect or the implementations of the third aspect.

Optionally, the communication apparatus further includes a transceiver. The processor is further configured to control the transceiver to send and receive a signal.

Optionally, the communication apparatus includes the memory. The memory stores the computer program.

A twelfth aspect of this application provides a communication apparatus. The communication apparatus includes a processor. The processor is configured to invoke and run a computer program stored in a memory, to enable the processor to implement any one of the fourth aspect or the implementations of the fourth aspect.

Optionally, the communication apparatus further includes a transceiver. The processor is further configured to control the transceiver to send and receive a signal.

Optionally, the communication apparatus includes the memory. The memory stores the computer program.

The communication apparatus according to the ninth aspect to the twelfth aspect may be a device or a chip (system) in the device.

A thirteenth aspect of this application provides a computer program product including instructions. When the computer program product is run on a computer, the computer is enabled to perform any one of the first aspect or the implementations of the first aspect.

A fourteenth aspect of this application provides a computer program product including instructions. When the computer program product is run on a computer, the computer is enabled to perform any one of the second aspect or the implementations of the second aspect.

A fifteenth aspect of this application provides a computer program product including instructions. When the computer program product is run on a computer, the computer is enabled to perform any one of the third aspect or the implementations of the third aspect.

A sixteenth aspect of this application provides a computer program product including instructions. When the computer program product is run on a computer, the computer is enabled to perform any one of the fourth aspect or the implementations of the fourth aspect.

A seventeenth aspect of this application provides a computer-readable storage medium, including computer instructions. When the computer instructions are run on a computer, the computer is enabled to perform any one of the first aspect or the implementations of the first aspect.

An eighteenth aspect of this application provides a computer-readable storage medium, including computer instructions. When the computer instructions are run on a computer, the computer is enabled to perform any one of the second aspect or the implementations of the second aspect

A nineteenth aspect of this application provides a computer-readable storage medium, including computer instructions. When the computer instructions are run on a computer, the computer is enabled to perform any one of the third aspect or the implementations of the third aspect.

A twentieth aspect of this application provides a computer-readable storage medium, including computer instructions. When the computer instructions are run on a computer, the computer is enabled to perform any one of the fourth aspect or the implementations of the fourth aspect.

A twenty-first aspect of this application provides a chip apparatus, including a processor, configured to be connected to a memory, and invoke a program stored in the memory, to enable the processor to perform any one of the first aspect or the implementations of the first aspect.

A twenty-second aspect of this application provides a chip apparatus, including a processor, configured to be connected to a memory, and invoke a program stored in the memory, to enable the processor to perform any one of the second aspect or the implementations of the second aspect.

A twenty-third aspect of this application provides a chip apparatus, including a processor, configured to be connected to a memory, and invoke a program stored in the memory, to enable the processor to perform any one of the third aspect or the implementations of the third aspect.

A twenty-fourth aspect of this application provides a chip apparatus, including a processor, configured to be connected to a memory, and invoke a program stored in the memory, to enable the processor to perform any one of the fourth aspect or the implementations of the fourth aspect.

A twenty-fifth aspect of this application provides a communication system. The communication system includes a first apparatus and a second apparatus, the first apparatus is communicatively connected to the second apparatus, and the first apparatus may be the communication apparatus according to the fifth aspect, the sixth aspect, the seventh aspect, the eighth aspect, or any implementation thereof.

For technical effects of any one of the fifth aspect and the implementations of the fifth aspect, and technical effects of the ninth aspect, the thirteenth aspect, the seventeenth aspect, and the twenty-first aspect, refer to the technical effects of any one of the first aspect and the implementations of the first aspect for understanding.

For technical effects of any one of the sixth aspect and the implementations of the sixth aspect, and technical effects of the tenth aspect, the fourteenth aspect, the eighteenth aspect, and the twenty-second aspect, refer to the technical effects of any one of the second aspect and the implementations of the second aspect for understanding.

For technical effects of any one of the seventh aspect and the implementations of the seventh aspect, and technical effects of the eleventh aspect, the fifteenth aspect, the nineteenth aspect, and the twenty-third aspect, refer to the technical effects of any one of the third aspect and the implementations of the third aspect for understanding.

For technical effects of any one of the eighth aspect and the implementations of the eighth aspect, and technical effects of the twelfth aspect, the sixteenth aspect, the twentieth aspect, and the twenty-fourth aspect, refer to the technical effects of any one of the fourth aspect and the implementations of the fourth aspect for understanding.

## BRIEF DESCRIPTION OF DRAWINGS

To describe the technical solutions in embodiments of this application more clearly, the following briefly describes the accompanying drawings for describing embodiments. It is clear that the accompanying drawings in the following description show merely some embodiments of this application, and a person of ordinary skill in the art may still derive other drawings from these accompanying drawings without creative efforts.

FIG. 1 is a diagram of an architecture of a communication system according to an embodiment of this application;
FIG. 2 is a diagram of another architecture of a communication system according to an embodiment of this application;
FIG. 3A is a diagram of another architecture of a communication system according to an embodiment of this application;
FIG. 3B is a diagram of another architecture of a communication system according to an embodiment of this application;
FIG. 4A is a diagram of an embodiment of a model training method according to an embodiment of this application;
FIG. 4B is a diagram of another embodiment of a model training method according to an embodiment of this application;
FIG. 4C is a diagram of another embodiment of a model training method according to an embodiment of this application;
FIG. 5A is a diagram of an example of an inverse function according to an embodiment of this application;
FIG. 5B is a diagram of another example of an inverse function according to an embodiment of this application;
FIG. 5C is a diagram of another example of an inverse function according to an embodiment of this application;
FIG. 6A is a diagram of an embodiment of a communication method according to an embodiment of this application;
FIG. 6B is a diagram of another embodiment of a communication method according to an embodiment of this application;
FIG. 7A is a diagram of another architecture of a communication system according to an embodiment of this application;
FIG. 7B is a diagram of another architecture of a communication system according to an embodiment of this application;
FIG. 7C is a diagram of another architecture of a communication system according to an embodiment of this application;
FIG. 7D is a diagram of another architecture of a communication system according to an embodiment of this application;
FIG. 8 is a diagram of a structure of a communication apparatus according to an embodiment of this application;
FIG. 9 is a diagram of a structure of a terminal device according to an embodiment of this application; and
FIG. 10 is a diagram of a structure of a network device according to an embodiment of this application.

## DESCRIPTION OF EMBODIMENTS

Embodiments of this application provide a communication method, to enable transmitters and receivers of different vendors to communicate with each other by an adjustment model. This application further provides a model training method, a corresponding communication apparatus, a computer-readable storage medium, a computer program product, and the like. Details are separately described in the following.

The following clearly and completely describes the technical solutions in embodiments of this application with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system after a 5G network (for example, a 6G mobile communication system), and a vehicle-to-everything (vehicle-to-everything, V2X) communication system. A wireless communication system to which this application is applicable includes a terminal device and a network device, and communication transmission may be performed between the terminal device and the network device.

The following describes the terminal device and the network device in this application.

The terminal device may be a wireless terminal device that can receive scheduling and indication information of the network device. The wireless terminal device may be a device that provides a user with voice and/or data connectivity, a hand-held device with a wireless connection function, or another processing device connected to a wireless modem.

The terminal device is also referred to as a user equipment (user equipment, UE), a mobile station (mobile station, MS), a mobile terminal (mobile terminal, MT), or the like, and is a device that includes a wireless communication function (providing voice/data connectivity for the user), for example, the hand-held device with the wireless connection function. Currently, some examples of the terminal device are as follows: a mobile phone (mobile phone), a tablet computer, a notebook computer, a palmtop computer, a notebook computer, a wireless router, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in internet of vehicles, a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like. For example, the wireless terminal in the internet of vehicles may be a vehicle-mounted device, an entire vehicle device, a vehicle-mounted module, a vehicle, or the like. The wireless terminal in the industrial control may be a robot or the like. For example, the wireless terminal in the self-driving may be an uncrewed aerial vehicle.

The network device may be a device in a wireless network. For example, the network device may be a radio access network (radio access network, RAN) node that accesses the terminal device to the wireless network, and may also be referred to as a radio access network device. The radio access network device is an apparatus that is deployed in a radio access network and that provides the wireless communication function for the terminal device. A non-limiting example of the radio access network device is a base station, and the base station is a macro base station, a micro base station (also referred to as a small cell), a relay station, an access point (access point, AP), a wearable device, a vehicle-mounted device, or the like in various forms. The base station may alternatively be a transmission reception node (transmission reception point, TRP), a transmission measurement function (transmission measurement function, TMF), or the like. For example, the base station in embodiments of this application may be a base station in the new radio (new radio, NR). The base station in the 5G NR may alternatively be referred to as a transmission reception point (transmission reception point, TRP), a transmission point (transmission point, TP), or a next generation NodeB (next generation NodeB, ngNB), or an evolved NodeB (evolved NodeB, eNB, or eNodeB) in a long term evolution (long term evolution, LTE) system. In a broad sense, the base station may alternatively be a base band unit (base band unit, BBU), a radio remote unit (remote radio unit, RRU), an active antenna unit (active antenna unit, AAU), a radio head (remote radio head, RRH), a central unit (central unit, CU), a distributed unit (distributed unit, DU), a positioning node, or the like.

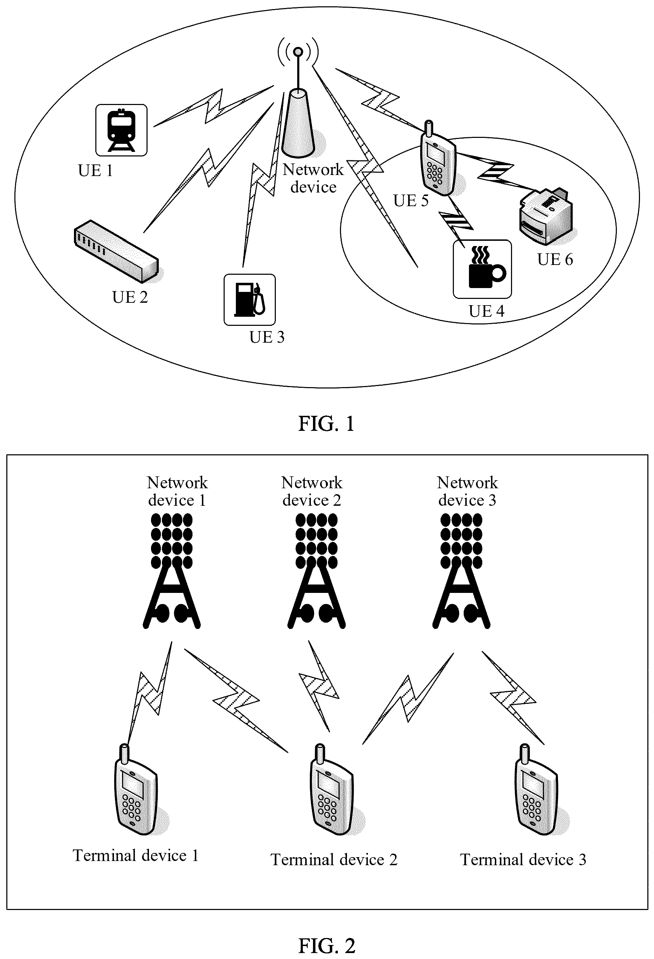

FIG. 1 is a diagram of a communication system according to an embodiment of this application. Refer to FIG. 1. The communication system shown in FIG. 1 includes a network device and a terminal device. The communication system includes one or more network devices and one or more terminal devices. In the communication system, a UE 1 to a UE 6 may communicate with the network device. In addition, the UE 4, the UE 5, and the UE 6 may also form a communication system. For example, the network device may send downlink information to the UE 5, and the UE 5 may send the downlink information to the UE 4 or the UE 6. Optionally, the communication system shown in FIG. 1 may be an LTE system, a 5G mobile communication system, or a mobile communication system (for example, a 6G mobile communication system) after a 5G network.

FIG. 2 is another diagram of a communication system according to an embodiment of this application. Refer to FIG. 2. The communication system shown in FIG. 2 includes a network device and a terminal device. The communication system includes one or more network devices and one or more terminal devices.

In the communication system, in a possible implementation, one network device may perform communication transmission with one or more terminal devices. For example, as shown in FIG. 2, a network device 1 separately communicates with a terminal device 1 and a terminal device 2. A network device 3 separately communicates with the terminal device 2 and a terminal device 3. In another possible implementation, a plurality of network devices may communicate with one terminal device, that is, the plurality of network devices simultaneously provide services for one terminal device. For example, the network device 1, a network device 2, and the network device 3 simultaneously provide services for the terminal device 2.

In the communication system provided in embodiments of this application, an adjustment model is used in a process of communication between the terminal device and the network device in FIG. 1 or FIG. 2, so that a transmitter and a receiver that are in the terminal device and the network device and that are not jointly trained can adapt to each other and normally communicate with each other.

For further understanding of the communication system provided in embodiments of this application, refer to FIG.

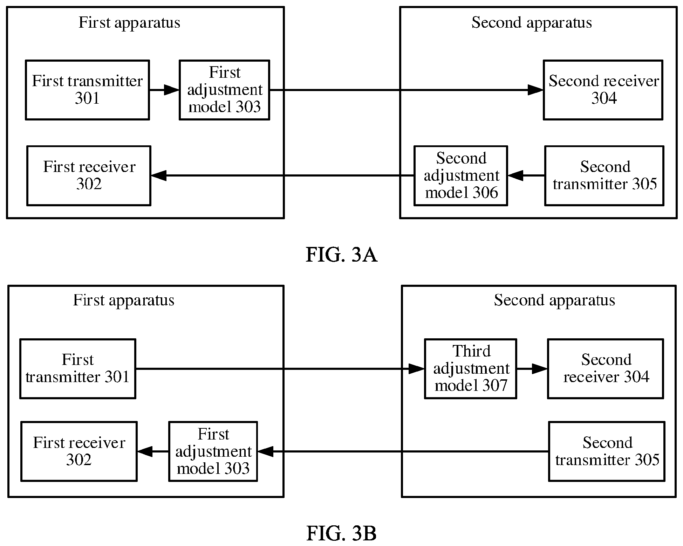

3A and FIG. 3B.

Refer to FIG. 3A and FIG. 3B. The communication system includes a first apparatus and a second apparatus. The first apparatus includes a first transmitter 301, a first receiver 302, and a first adjustment model 303. The second apparatus includes a second receiver 304 and a second transmitter 305.

In FIG. 3A, the first adjustment model 303 corresponds to the first transmitter 301. In FIG. 3B, the first adjustment model 303 corresponds to the first receiver 302. The first adjustment model 303 in FIG. 3A and the first adjustment model 303 FIG. 3B may be different.

In addition, in embodiments of this application, in FIG. 3A, the second apparatus may further include a second adjustment model 306, and the second adjustment model 306 corresponds to the second transmitter 305. In FIG. 3B, the second apparatus may further include a third adjustment model 307, and the third adjustment model 307 corresponds to the second receiver 304.

In FIG. 3A and FIG. 3B, the first adjustment model 303 is disposed in the first apparatus. Actually, the first adjustment model may be disposed in the first apparatus in a form of a module/unit, or may be disposed independently of the first apparatus. This is not limited in this application.

In embodiments of this application, a function of the first transmitter 301/the second transmitter 305 may be relative to a function of the first receiver 302/the second receiver 304. For example, the first transmitter 301/the second transmitter 305 may include an encoder, and the first receiver 302/the second receiver 304 may include a decoder; or the first transmitter 301/the second transmitter 305 may include a modulator, and the first receiver 302/the second receiver 304 may include a demodulator; or the first transmitter 301/the second transmitter 305 may include a compression unit, and the first receiver 302/the second receiver 304 may include a decompression unit.

It should be noted that, the first apparatus and the second apparatus may be devices, or may be chips (systems) in the devices. When the first apparatus or the second apparatus is the device, the first apparatus may be a terminal device, and the second apparatus may be a network device or the terminal device; or the first apparatus may be a network device, and the second apparatus may be a terminal device or the network device. When the first apparatus or the second apparatus is the chip (system), the first apparatus may be a chip (system) in a terminal device, and the second apparatus may be a chip (system) in a network device or the terminal device; or the first apparatus may be a chip (system) in a network device, and the second apparatus may be a chip (system) in a terminal device or the network device.

Based on the communication system shown in FIG. 3A and FIG. 3B, in embodiments of this application, an adjustment model may be trained and the trained adjustment model may be used for communication. The following first describes a model training solution.

The model training solution provided in embodiments of this application may include a model training process on a transmitter side and a model training process on a receiver side. In the model training process on the transmitter side, model training is performed based on the communication system of a structure shown in FIG. 3A. In the model training process on the receiver side, model training is performed based on the communication system of a structure shown in FIG. 3B. The following separately provides descriptions.

First, the model training solution on the transmitter side is described.

1. Training based on a first training target

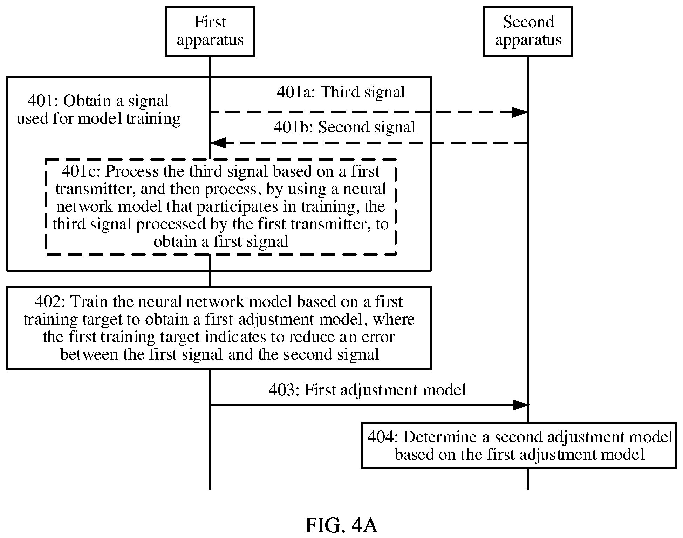

Refer to FIG. 4A. An embodiment of a model training method provided in an embodiment of this application includes the following steps.

401: A first apparatus obtains a signal used for model training, where the signal used for model training includes a first signal and a second signal.

The first signal is a signal obtained by a neural network model that participates in training by processing a signal obtained by a first transmitter by processing a third signal. The second signal is a signal obtained by a second transmitter by processing the third signal. The third signal is a source signal.

A source signal (x) may be understood as a signal that is not processed by the first transmitter and the neural network model that participates in training (a first adjustment model obtained before training is completed). The source signal (x) may be provided by the first apparatus, or may be obtained in another manner. This is not limited in this application.

The first signal is a signal (t1(f1(x))) obtained by the neural network model that participates in training by processing a signal obtained through processing by the first transmitter. f1 may represent the first transmitter, and t1 represents the neural network model or the first adjustment model.

The second signal is a signal (f2(x)) obtained by the second transmitter by processing the third signal. f2 may represent the second transmitter.

402: The first apparatus trains the neural network model based on a first training target to obtain the first adjustment model, where the first training target indicates to reduce an error between the first signal and the second signal.

The first training target may be understood as making the first signal and the second signal as close as possible, or making the error between the first signal and the second signal as small as possible. To be specific, the signal (t1(f1(x))) obtained through joint processing by the first transmitter and the first adjustment model can be as close as possible to the signal (f2(x)) obtained by the second transmitter by processing the same source signal.

A loss function of the neural network model in this training solution may be a difference between t1(f1(x)) and f2(x). For example, a mean square error (mean square error, mse) may be expressed as mse(t1(f1(x)), f2(x))= $(t1(f1(x))-f2(x))^2$.

The first apparatus may calculate the loss function, update a weight of t1 by using an algorithm such as gradient descent, and train the neural network model t1, to obtain the first adjustment model based on a target of minimizing the loss function.

Processes of step 401 and step 402 are repeatedly performed by using a plurality of source signals, and the neural network model is iterated and updated, so that the first adjustment model can be obtained.

Optionally, step 401 may include step 401a, step 401b, and step 401c.

401a: The first apparatus sends the third signal to a second apparatus.

401b: The first apparatus receives a second signal from the second apparatus.

401c: The first apparatus processes the third signal based on the first transmitter, and then processes, by using the neural network model that participates in training, the third signal processed by the first transmitter, to obtain the first signal.

Optionally, after step 402, step 403 and step 404 may be further included.

403: The first apparatus sends the first adjustment model to the second apparatus, where the first adjustment model is used by the second apparatus to determine a second adjustment model used for the second transmitter.

A neural network of the second adjustment model is an inverse neural network of a neural network of the first adjustment model.

404: The second apparatus determines the second adjustment model based on the first adjustment model.

In the model training solution provided in embodiments of this application, because a second receiver and the second transmitter are usually jointly trained, the second receiver can correctly receive data processed by the second transmitter. If t1(f1(x)) is as close as possible to f2(x), the second receiver can also correctly receive t1(f1(x)). Therefore, the first apparatus and the second apparatus can normally communicate with each other through the training process.

2. Training based on a second training target

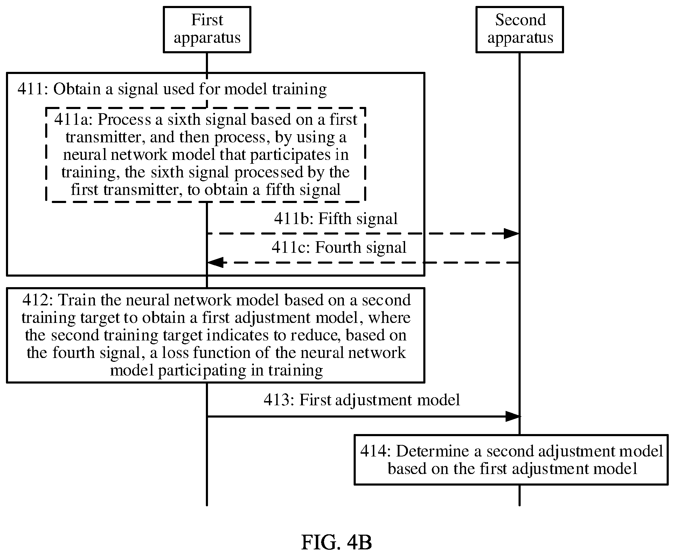

Refer to FIG. 4B. Another embodiment of a model training method provided in an embodiment of this application includes the following steps.

411: A first apparatus obtains a signal used for model training, where the signal used for model training includes a fourth signal and a fifth signal.

The fourth signal is a signal obtained by a second receiver by processing the fifth signal, the fifth signal is a signal obtained by a neural network model that participates in training by processing a signal obtained by a first transmitter by processing a sixth signal, and the sixth signal is a source signal.

A source signal (x) may be understood as a signal that is not processed by the first transmitter and a first adjustment model. The source signal (x) may be provided by the first apparatus, or may be obtained in another manner. This is not limited in this application.

The fifth signal is a signal (t1(f1(x))) obtained by the first adjustment model by processing a signal obtained by the first transmitter by processing the source signal (x).

The fourth signal is a signal obtained by the second receiver by processing the fifth signal (t1(f1(x))). The processing process may include: first performing processing such as decoding and demodulation on the fifth signal (t1(f1(x))) to obtain g2(t1(f1(x))), then calculating a loss function L, for example, mse(x, g2(t1(f1(x)))) or cross entropy (cross entropy, CE) (x, g2(t1(f1(x)))), for g2(t1(f1(x))), and performing derivation to obtain a gradient $\partial L/\partial t1(f_1(x))$, where g2 may represent the second receiver.

412: The first apparatus trains the neural network model based on a second training target to obtain the first adjustment model, where the second training target indicates to reduce, based on the fourth signal, a loss function of the neural network model that participates in training.

The second training target may be understood as that the first apparatus adjusts, based on the gradient fed back by a second apparatus, a weight of the neural network model that participates in training, so that the loss function is as small as possible.

The first apparatus may adjust the weight of the neural network model by using the gradient $\partial L/\partial t1(f_1(x))$, to update the neural network model.

Processes of step 411 and step 412 are repeatedly performed by using a plurality of source signals, and the neural network model is iterated and updated, so that the first adjustment model can be obtained.

Optionally, step 411 may include step 411a, step 411b, and step 411c.

411a: The first apparatus processes the sixth signal based on the first transmitter, and then processes, by using the neural network model that participates in training, the sixth signal processed by the first transmitter, to obtain the fifth signal.

411b: The first apparatus sends the fifth signal to the second apparatus.

411c: The first apparatus receives the fourth signal from the second apparatus.

Optionally, after step 412, step 413 and step 414 may be further included.

413: The first apparatus sends the first adjustment model to the second apparatus, where the first adjustment model is used by the second apparatus to determine a second adjustment model used for a second transmitter.

A neural network of the second adjustment model is an inverse neural network of a neural network of the first adjustment model.

414: The second apparatus determines the second adjustment model based on the first adjustment model.

In the model training solution provided in embodiments of this application, the first adjustment model obtained through joint training by the first apparatus and the second apparatus makes the loss function as small as possible. Therefore, the first adjustment model can enable the first transmitter and the second receiver to normally communicate with each other.

Second, the model training solution on the receiver side is described.

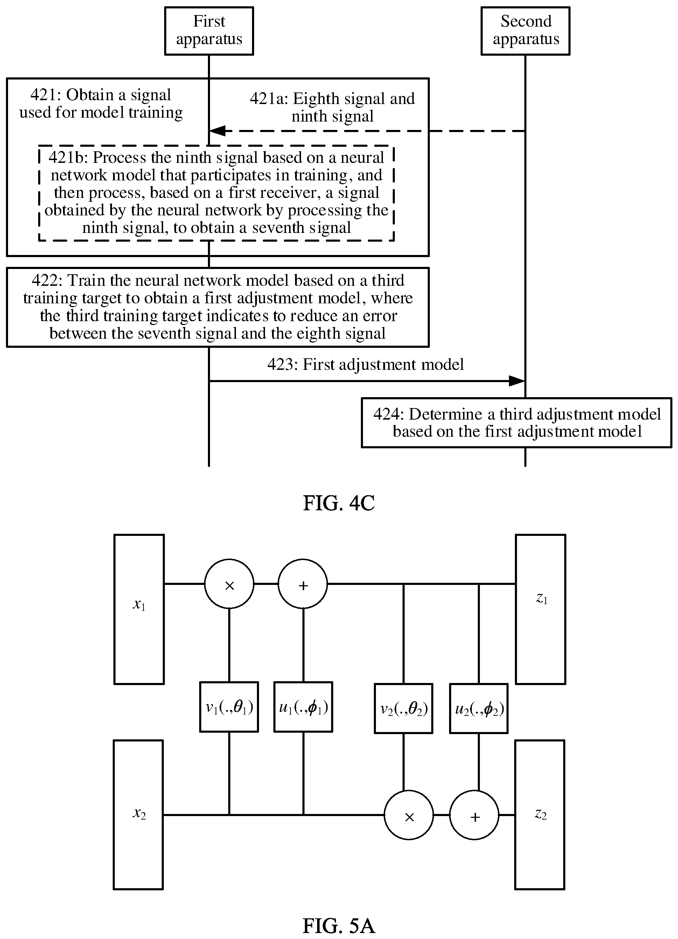

Refer to FIG. 4C. Another embodiment of a model training method provided in an embodiment of this application includes the following steps.

1. Training based on a third training target

421: A first apparatus obtains a signal used for model training, where the signal used for model training includes a seventh signal and an eighth signal.

The seventh signal is a signal obtained by a first receiver by processing a signal obtained by a neural network model that participates in training by processing a ninth signal, the ninth signal is obtained by a second transmitter by processing a source signal, and the eighth signal is the source signal or is obtained by a second receiver by processing the ninth signal.

A source signal (x) may be understood as a signal that is not processed by the second transmitter. The source signal (x) may be provided by a second apparatus, or may be obtained in another manner. This is not limited in this application.

The ninth signal is a signal (f2(x)) obtained by the second transmitter by processing the source signal (x).

The eighth signal is the source signal (x) or a signal (g2(f2(x))) obtained by the second receiver by processing the ninth signal.

The seventh signal is a signal (g1(t1(f2(x)))) obtained by the first receiver by processing a signal (t1(f2(x))) obtained by a first adjustment model by processing the ninth signal.

422: The first apparatus trains the neural network model based on a third training target to obtain the first adjustment model, where the third training target indicates to reduce an error between the seventh signal and the eighth signal.

The third training target may be understood as that the seventh signal is as close as possible to the eighth signal, or the error between the seventh signal and the eighth signal is as small as possible. To be specific, the signal (g1(t1(f2(x)))) obtained through joint processing by the first adjustment model and the first receiver can be as close as possible to the source signal (x) or the signal (g2(f2(x))) obtained by the second receiver by processing the signal (f2(x)).

Processes of step 421 and step 422 are repeatedly performed by using a plurality of source signals, and the neural network model is iterated and updated, so that the first adjustment model can be obtained.

Optionally, step 421 may include step 421a and step 421b.

421a: The first apparatus receives the eighth signal and the ninth signal that are from the second apparatus.

421b: The first apparatus processes the ninth signal based on the neural network model that participates in training, and then processes, based on the first receiver, a signal obtained by the neural network by processing the ninth signal, to obtain the seventh signal.

Optionally, after step 422, step 423 and step 424 may be further included.

423: The first apparatus sends the first adjustment model to the second apparatus, where the first adjustment model is used by the second apparatus to determine a third adjustment model used for the second receiver.

A neural network of the third adjustment model is an inverse neural network of a neural network of the first adjustment model.

424: The second apparatus determines the third adjustment model based on the first adjustment model.

In the model training solution provided in embodiments of this application, a result obtained by the first adjustment model and the first receiver by jointly processing the signal (f2(x)) encoded or modulated by the second transmitter is basically consistent with the signal (x) that is not encoded or modulated by the second transmitter or a result (g2(f2(x))) obtained by the second receiver by processing the signal (f2(x)). Because the second receiver and the second transmitter are usually jointly trained, the second receiver can correctly receive data processed by the second transmitter. If g1(t1(f2(x))) is as close as possible to x or g2(f2(x)), the first receiver can also correctly receive the signal (f2(x)) sent by the second transmitter. Therefore, the first apparatus and the second apparatus can normally communicate with each other through the training process.

The foregoing three model training solutions all include a solution in which the first apparatus sends the first adjustment model to the second apparatus, and the second apparatus determines the second adjustment model or the third adjustment model based on the first adjustment model.

Regardless of whether the second adjustment model is determined based on the first adjustment model or the third adjustment model is determined based on the first adjustment model, the second adjustment model or the third adjustment model may be the inverse neural network of the neural network of the first adjustment model. For a process in which the second apparatus determines the second adjustment model or the third adjustment model, refer to the following process for understanding.

If a function of the first adjustment model is expressed as $y=t1(x,W)$, a function of the second adjustment model or the third adjustment model may be expressed as $x=t2(y,W)$ and $t2=t1^{-1}$, where $W$ is a weight of the model. An adjustment model may include a plurality of inverse functions, that is, $t1(x) = t1_K(t1_{K-1}((t1_1(x))))$ and

$$t2(y) = t1^{-1}(y) = t1_1^{-1}\left(\left(t1_{K-1}^{-1}\left(t1_K^{-1}(y)\right)\right)\right)$$ , where K represents a quantity of inverse functions.

The inverse function includes: an inverse activation function, for example, $t1(x) = \mathrm{sigmoid}(x) = \frac{1}{1+e^{-x}}$ and

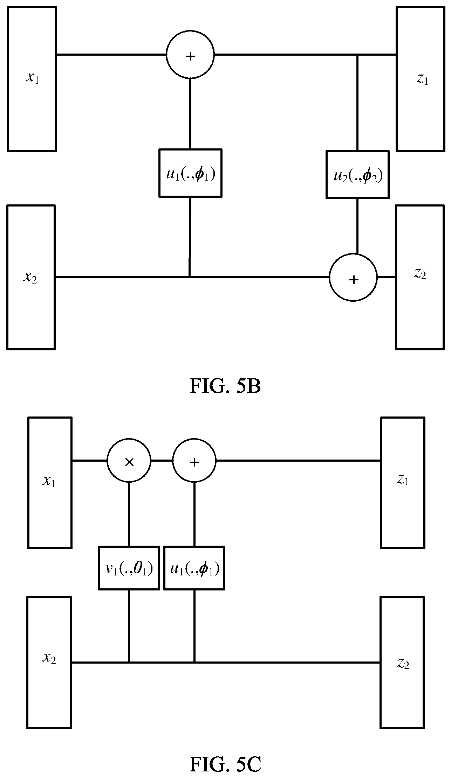

$$t2(y) = t1^{-1}(y) = \ln\frac{y}{1-y}$$ ; and a linear operation, for example, $t1(x) = Wx + b$ and $t2(y) = t1^{-1}(y) = W^{-1}(y - b)$. The inverse neural network is shown in FIG. 5A, where $v_1(.,\theta_1)$ represents a function $v_1$ having a parameter $\theta_1$, $u_1(.,\phi_1)$ represents a function $u_1$ having a parameter $\phi_1$, $v_2(.,\theta_2)$ represents a function $v_2$ having a parameter $\theta_2$, $v_2(.,\theta_2)$ represents a function $v_2$ having a parameter $\theta_2$, $u_2(.,\phi_2)$ represents a function $u_2$ having a parameter $\phi_2$, and $t1$ is $z_1 = x_1 * v_1(x_2,\theta_1) + u_1(x_2,\phi_1)$, $z_2 = x_2 * v_2(z_1,\theta_2) + u_2(z_1,\phi_2)$. Correspondingly, t2 is $x_2 = (z_2 - u_2(z_1,\theta_2))/v_2(z_1,\phi_2)$, $x_1 = (z_1 - u_1(x_2,\theta_1))/v_1(x_2,\phi_1)$ Only one of $u_1$, $v_1$, $u_2$, and $v_2$ needs to have a parameter. As shown in FIG. 5B, t1 is $z_1 = x_1 + u_1(x_2,\phi_1)$, $z_2 = x_2 + u_2(z_1,\phi_2)$, and correspondingly, t2 is $x_2 = z_2 - u_2(z_1,\theta_2)$, $x_1 = z_1 - u_1(x_2,\theta_1)$. As shown in FIG. 5C, t1 is $z_1 = x_1 * v_1(x_2,\theta_1) + u_1(x_2,\phi_1)$, $z_2, = x_2$, and correspondingly, t2 is $x_2 = z_2$, $x_1 = (z_1 - u_1(x_2,\theta_1))/v_1(x_2,\phi_1)$.

FIG. 5A to FIG. 5C describe, by using an example, a process of deriving the second adjustment model or the third adjustment model based on the first adjustment model. In this way, the second apparatus does not need to train the second adjustment model applicable to the second transmitter, or train the third adjustment model applicable to the second receiver, and may obtain the second adjustment model or the third adjustment model through derivation of the first adjustment model. In this way, a calculation amount is reduced, and overheads of obtaining the second adjustment model or the third adjustment model are reduced.

In addition, after the adjustment model is trained, an association relationship between information about the first transmitter and information about the second receiver and the first adjustment model may be established. For example, the association relationship is represented in a form of a first identifier group. The first identifier group may be represented as, for example, (Tx01, M01, and Re02). Tx01 represents an identifier of the first transmitter, Re02 represents an identifier of the second receiver, and M01 represents an identifier of the first adjustment model. Similarly, an association relationship between the first receiver and the second transmitter and the first adjustment model may also be established. For example, the association relationship is represented in a form of a second identifier group. The second identifier group may be represented as, for example, (Tx02, M02, and Re01). Tx02 represents an identifier of the second transmitter, Re01 represents an identifier of the first receiver, and M02 represents the identifier of the first adjustment model corresponding to the first receiver and the second transmitter. Certainly, forms of the identifiers in the first identifier group and the second identifier group that are listed herein are merely examples, and specific forms of the identifiers are not limited in this application.

It should be noted that, a signal in this application may also be expressed as data, a symbol, or a bit, and is essentially a data signal despite different expression manners.

The foregoing describes the model training solution. After a model is trained, the adjustment model may be used for communication. The following describes a communication process based on the adjustment model with reference to the accompanying drawings.

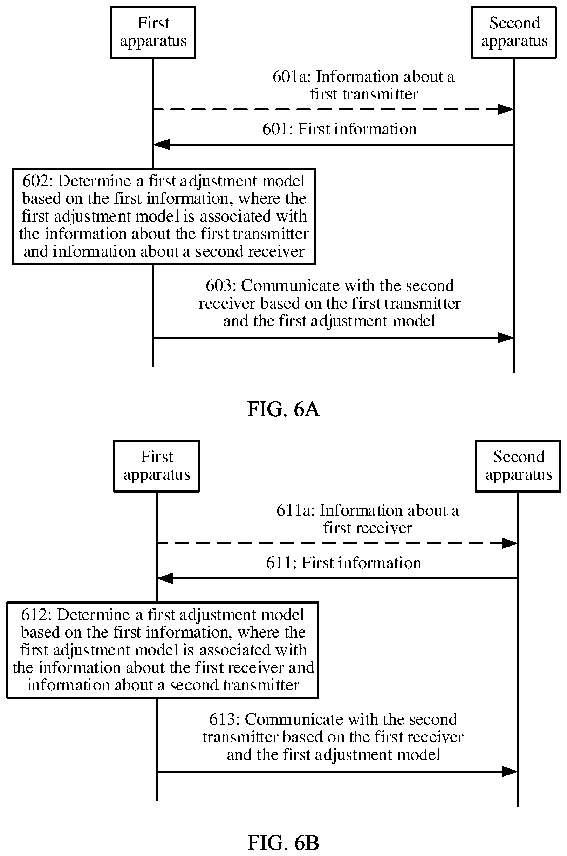

Based on the communication system of the structure shown in FIG. 3A, refer to FIG. 6A. An embodiment of a communication method provided in an embodiment of this application includes the following steps.

601: A first apparatus receives first information from a second apparatus.

The first information may be an identifier of a first adjustment model or association information that may be used to determine a first adjustment model.

602: The first apparatus determines the first adjustment model based on the first information, where the first adjustment model is associated with information about a first transmitter and information about a second receiver.

The information about the first transmitter may be an identifier of the first transmitter or other information that may indicate the first transmitter, and the information about the second receiver may be an identifier of the second receiver or other information that may indicate the second receiver.

That the first adjustment model is associated with the information about the first transmitter and the information about the second receiver means that the first adjustment model may be determined (for example, found or obtained through calculation) by using the information about the first transmitter and the information about the second receiver.

603: The first apparatus communicates with the second receiver of the second apparatus based on the first transmitter and the first adjustment model.

Optionally, before step 601, step 601a may be further included.

601a: The first apparatus sends the information about the first transmitter to the second apparatus.

The second apparatus may determine the identifier of the first adjustment model based on the information about the first transmitter and the information about the second receiver configured to communicate with the first transmitter, and then return the identifier of the first adjustment model to the first apparatus.

Alternatively, the second apparatus may return the information about the second receiver to the first apparatus based on the information about the first transmitter and the information about the second receiver configured to communicate with the first transmitter, and the first apparatus determines the identifier of the first adjustment model based on the information about the first transmitter and the information about the second receiver.

Both the first apparatus and the second apparatus may include a first identifier group. Both the first apparatus and the second apparatus may determine the identifier of the first adjustment model from the first identifier group based on the identifier of the first transmitter and the identifier of the second receiver. The first identifier group includes the identifier of the first transmitter, the identifier of the second receiver, and the identifier of the first adjustment model.

For content of the first identifier group, refer to the foregoing descriptions for understanding, and details are not described herein again.

Optionally, step 603 may specifically include: The first apparatus processes a to-be-sent signal based on the first transmitter, and then processes, based on the first adjustment model, a signal processed by the first transmitter; and the first apparatus sends, to the second apparatus, a signal processed by the first adjustment model.

In this optional embodiment, after the first transmitter processes a to-be-sent signal (x), the first adjustment model processes a signal (f1(x)) processed by the first transmitter, and then sends a signal (t1(f1(x))) processed by the first adjustment model. Because the second apparatus participates in training of the first adjustment model, the second receiver can correctly receive the signal processed by the first adjustment model, to implement effective communication between the first transmitter and the second receiver.

It should be noted that, that the first transmitter first processes the to-be-sent signal (x), and then the first adjustment model processes the signal (f1(x)) processed by the first transmitter is only a possible implementation. Alternatively, another processing sequence may be used. For example, the first adjustment model first processes the to-be-sent signal, and then the first transmitter processes the signal processed by the first adjustment model. This is not limited in this application.

In embodiments provided in this application, the first apparatus may determine the first adjustment model, and then communicate with the second receiver of the second apparatus based on the first transmitter and the first adjustment model. In this way, even if the first transmitter and the second receiver are not jointly trained, communication between the first apparatus and the second apparatus can also be implemented by using the first adjustment model.

Based on the communication system shown in FIG. 3B, refer to FIG. 6B. Another embodiment of a communication method provided in an embodiment of this application includes the following steps.

611: A first apparatus receives first information from a second apparatus.

The first information may be an identifier of a first adjustment model or association information that may be used to determine a first adjustment model.

612: The first apparatus determines the first adjustment model based on the first information, where the first adjustment model is associated with information about a first receiver and information about a second transmitter.

The information about the first receiver may be an identifier of the first receiver or other information that may indicate the first receiver. The information about the second transmitter may be an identifier of the second transmitter or other information that may indicate the second transmitter.

That the first adjustment model is associated with the information about the first receiver and the information about the second transmitter means that the first adjustment model may be determined (for example, found or obtained through calculation) by using the information about the first receiver and the information about the second transmitter.

613: The first apparatus communicates with the second transmitter of the second apparatus based on the first receiver and the first adjustment model.

In this embodiment provided in this application, the first apparatus may determine the first adjustment model, and then communicate with the second transmitter of the second apparatus based on the first receiver and the first adjustment model. In this way, even if the first receiver and the second transmitter are from different vendors, and are not jointly trained, communication between the first apparatus and the second apparatus can also be implemented by using the first adjustment model.

Optionally, before step 611, step 611a may be further included.

611a: The first apparatus sends the information about the first receiver to the second apparatus.

The second apparatus may determine the identifier of the first adjustment model based on the information about the first receiver and the information about the second transmitter configured to communicate with the first receiver, and then return the identifier of the first adjustment model to the first apparatus.

Alternatively, the second apparatus may return the information about the second transmitter to the first apparatus based on the information about the first receiver and the information about the second transmitter configured to communicate with the first receiver, and the first apparatus determines the identifier of the first adjustment model based on the information about the second transmitter and the information about the first receiver.

Both the first apparatus and the second apparatus may include a second identifier group. The second identifier group includes the identifier of the second transmitter, the identifier of the first receiver, and the identifier of the first adjustment model. Both the first apparatus and the second apparatus may determine the identifier of the first adjustment model from the second identifier group based on the identifier of the second transmitter and the identifier of the first receiver.

For content of the second identifier group, refer to the foregoing descriptions for understanding, and details are not described herein again.

Optionally, step 613 may specifically include: The first apparatus processes, based on the first adjustment model, a signal from the second transmitter of the second apparatus; and the first apparatus processes, based on the first receiver, a signal processed by the first adjustment model.

In this possible embodiment, the first adjustment model processes a signal f2(x) from the second transmitter of the second apparatus to obtain t1(f2(x)), and the first receiver processes t1(f2(x)) to obtain g1(t1(f2(x))). Because the second apparatus participates in training of the first adjustment model, the first receiver may correctly receive the signal processed by the first adjustment model, to implement effective communication between the second transmitter and the first receiver.

It should be noted that, that the first adjustment model first processes the signal f2(x) sent by the second transmitter, and then the first receiver processes the signal t1(f2(x)) processed by the first adjustment model is only a possible implementation. Alternatively, another processing sequence may be used. For example, the first receiver first processes the signal sent by the second transmitter, and then the first adjustment model processes the signal processed by the first receiver. This is not limited in this application.

It should be noted that, in a communication process, the model training process described in FIG. 4A to FIG. 4C may also be performed. In this way, the adjustment model can be continuously updated, and communication quality is improved.

In the communication method described above, one first adjustment model is described. Actually, there may be a plurality of first adjustment models, and the plurality of first adjustment models may be connected in parallel or connected in series. The following separately describes the first adjustment models.

1. A plurality of first adjustment models are connected in parallel, and each of the first adjustment models that are connected in parallel is used by the first transmitter to communicate with a different second receiver.

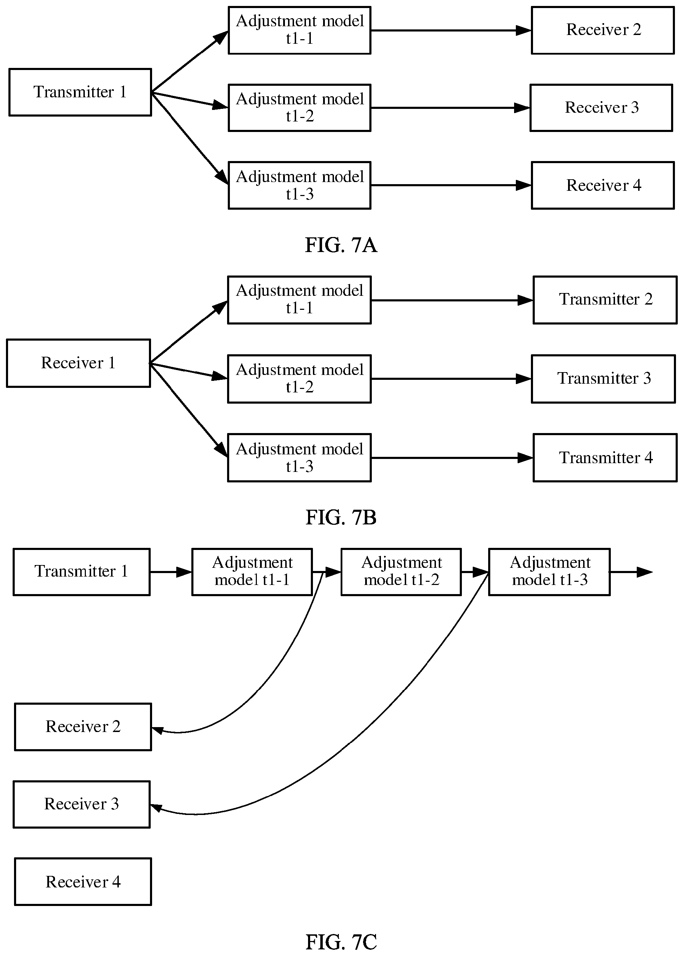

In FIG. 7A, there are three adjustment models corresponding to a transmitter 1, which are respectively represented by an adjustment model t1-1, an adjustment model t1-2, and an adjustment model t1-3. The adjustment model t1-1, the adjustment model t1-2, and the adjustment model t1-3 are connected in parallel.

The adjustment model t1-1 is used by the transmitter 1 to communicate with a receiver 2, the adjustment model t1-2 is used by the transmitter 1 to communicate with a receiver 3, and the adjustment model t1-3 is used by the transmitter 1 to communicate with a receiver 4. It should be noted that, in this embodiment of this application, communication between other different transmitters and a receiver may be implemented by combining the existing adjustment model t1-1, adjustment model t1-2, and adjustment model t1-3. For example, when an inverse neural network of the adjustment model t1-1 and the adjustment model t1-2 are connected in series, a transmitter 2 can communicate with the receiver 3.

2. A plurality of first adjustment models are connected in parallel, and each of the first adjustment models that are connected in parallel is used by the first receiver to communicate with a different second transmitter.

In FIG. 7B, there are three adjustment models corresponding to a receiver 1, which are respectively represented by an adjustment model t1-1, an adjustment model t1-2, and an adjustment model t1-3. The adjustment model t1-1, the adjustment model t1-2, and the adjustment model t1-3 are connected in parallel.

The adjustment model t1-1 is used by the receiver 1 to communicate with a transmitter 2, the adjustment model t1-2 is used by the receiver 1 to communicate with a transmitter 3, and the adjustment model t1-3 is used by the receiver 1 to communicate with a transmitter 4.

The plurality of adjustment models that are connected in parallel and that are provided in this embodiment of this application are used for communication between a transmitter and different receivers, or communication between a receiver and different transmitters, so that communication flexibility can be improved.

3. A plurality of first adjustment models are connected in series, and at least two first adjustment models that are directly connected and that are connected in series are used by the first transmitter to communicate with different second receivers.

In FIG. 7C, there are three adjustment models corresponding to a transmitter 1, which are respectively represented by an adjustment model t1-1, an adjustment model t1-2, and an adjustment model t1-3. The adjustment model t1-1, the adjustment model t1-2, and the adjustment model t1-3 are connected in series.

The adjustment model t1-1 is used by the transmitter 1 to communicate with a receiver 2. After being connected in series, the adjustment model t1-1 and the adjustment model t1-2 are used by the transmitter 1 to communicate with a receiver 3. After being connected in series, the adjustment model t1-1, the adjustment model t1-2, and the adjustment model t1-3 are used by the transmitter 1 to communicate with a receiver 4. It should be noted that, in this embodiment of this application, communication between other different transmitters and a receiver may be implemented by combining the existing adjustment model t1-1, adjustment model t1-2, and adjustment model t1-3. For example, when the adjustment model t1-2 and the adjustment model t1-3 are connected in series, a transmitter 2 can communicate with the receiver 4.

4. A plurality of first adjustment models are connected in series, and at least two first adjustment models that are directly connected and that are connected in series are used by a first receiver to communicate with different second transmitters.

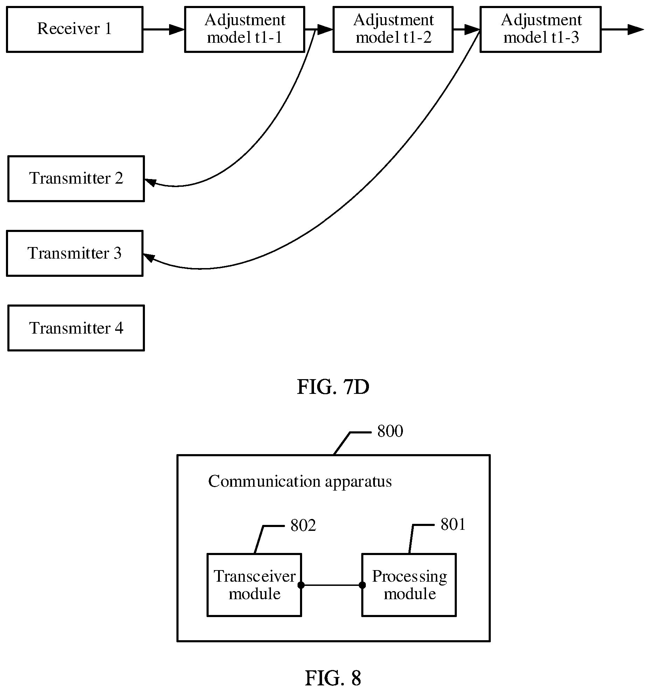

In FIG. 7D, there are three adjustment models corresponding to a receiver 1, which are respectively represented by an adjustment model t1-1, an adjustment model t1-2, and an adjustment model t1-3. The adjustment model t1-1, the adjustment model t1-2, and the adjustment model t1-3 are connected in series.

The adjustment model t1-1 is used by the receiver 1 to communicate with a transmitter 2. After being connected in series, the adjustment model t1-1 and the adjustment model t1-2 are used by the receiver 1 to communicate with a transmitter 3. After being connected in series, the adjustment model t1-1, the adjustment model t1-2, and the adjustment model t1-3 are used by the receiver 1 to communicate with a transmitter 4.

The plurality of adjustment models that are connected in series and that are provided in this embodiment of this application are used for communication between a transmitter and different receivers, or communication between a receiver and different transmitters, so that communication flexibility can be improved.

It should be noted that, in this embodiment of this application, in the solutions, described in FIG. 7A to FIG. 7D, in which the adjustment models are connected in parallel and are connected in series, a trained adjustment model in any structure may be migrated to another apparatus for use. For example, in FIG. 7C, the adjustment model t1-2 may be used by the transmitter 2 to communicate with a receiver 3, and the adjustment model t1-3 may be used by the transmitter 3 to communicate with a receiver 4.

The foregoing describes the model training method and the adjustment model-based communication method. The following describes a communication apparatus.

Refer to FIG. 8. An embodiment of a communication apparatus 800 provided in an embodiment of this application includes a processing module 801 and a transceiver module 802.

The processing module 801 is configured to determine a first adjustment model based on first information from a second apparatus, where the first adjustment model is associated with information about a first transmitter and information about a second receiver, or the first adjustment model is associated with information about a first receiver and information about a second transmitter, the first transmitter and the first receiver correspond to a first apparatus, and the second receiver and the second transmitter correspond to the second apparatus.

The processing module 801 is further configured to communicate with the second receiver of the second apparatus based on the first transmitter and the first adjustment model; or the first apparatus communicates with the second transmitter of the second apparatus based on the first receiver and the first adjustment model.

Optionally, the processing module 801 is specifically configured to process a to-be-sent signal based on the first transmitter, and then process, based on the first adjustment model, a signal processed by the first transmitter.

The transceiver module 802 is configured to send a signal processed by the first adjustment model to the second apparatus.

Optionally, the processing module 801 is specifically configured to process, based on the first adjustment model, a signal from the second transmitter of the second apparatus, and process, based on the first receiver, the signal processed by the first adjustment model.

Optionally, the first information includes an identifier of the first adjustment model, and the identifier of the first adjustment model is used to determine the first adjustment model.

Optionally, the first information includes an identifier of the second receiver or an identifier of the second transmitter; and the identifier of the second receiver or the identifier of the second transmitter is used to determine an identifier of the first adjustment model.

Optionally, the identifier of the first adjustment model is determined by the first apparatus from a first identifier group based on an identifier of the first transmitter and the identifier of the second receiver, and the first identifier group includes the identifier of the first transmitter, the identifier of the second receiver, and the identifier of the first adjustment model; or the identifier of the first adjustment model is determined by the first apparatus from a second identifier group based on an identifier of the first receiver and the identifier of the second transmitter, and the second identifier group includes the identifier of the second transmitter, the identifier of the first receiver, and the identifier of the first adjustment model.

Optionally, the processing module 801 is further configured to train a neural network model based on a first training target to obtain the first adjustment model, where the first training target indicates to reduce an error between a first signal and a second signal, the first signal is a signal obtained by the neural network model that participates in training by processing a signal obtained by the first transmitter by processing a third signal, the second signal is a signal obtained by the second transmitter by processing the third signal, and the third signal is a source signal.

Optionally, the processing module 801 is further configured to train a neural network model based on a second training target to obtain the first adjustment model, where the second training target indicates to reduce, based on a fourth signal, a loss function of the neural network model that participates in training, the fourth signal is a signal obtained by the second receiver by processing a fifth signal, the fifth signal is a signal obtained by the neural network model that participates in training by processing a signal obtained by the first transmitter by processing a sixth signal, and the sixth signal is a source signal.

Optionally, the processing module 801 is further configured to train a neural network model based on a third training target to obtain the first adjustment model, where the third training target indicates to reduce an error between a seventh signal and an eighth signal, the seventh signal is a signal obtained by the first receiver by processing a signal obtained by the neural network model that participates in training by processing a ninth signal, the ninth signal is obtained by the second transmitter by processing a source signal, and the eighth signal is the source signal or is obtained by the second receiver by processing the ninth signal.

Optionally, the transceiver module 802 is further configured to send the first adjustment model to the second apparatus, where the first adjustment model is used by the second apparatus to determine a second adjustment model used for the second transmitter.

Optionally, a neural network of the second adjustment model is an inverse neural network of a neural network of the first adjustment model.

Optionally, the transceiver module 802 is further configured to send the first adjustment model to the second apparatus, where the first adjustment model is used by the second apparatus to determine a third adjustment model used for the second receiver.

Optionally, a neural network of the third adjustment model is an inverse neural network of a neural network of the first adjustment model.

Optionally, if there are a plurality of first adjustment models, and the plurality of first adjustment models are connected in parallel, each of the first adjustment models that are connected in parallel is used by the first transmitter to communicate with a different second receiver; or each of the first adjustment models that are connected in parallel is used by the first receiver to communicate with a different second transmitter.

Optionally, if there are a plurality of first adjustment models, and the plurality of first adjustment models are connected in series, at least two first adjustment models that are directly connected and that are connected in series are used by the first transmitter to communicate with different second receivers; or at least two first adjustment models that are directly connected and that are connected in series are used by the first receiver to communicate with different second transmitters.

When the communication apparatus 800 is used in a model training process,

a processing module 801 is configured to obtain a signal used for model training, where the signal used for model training includes a first signal and a second signal, the first signal is a signal obtained by a neural network model that participates in training by processing a signal obtained by a first transmitter by processing a third signal, the second signal is a signal obtained by a second transmitter by processing the third signal, and the third signal is a source signal; and train the neural network model based on a first training target to obtain a first adjustment model, where the first training target indicates to reduce an error between the first signal and the second signal.

Optionally, the transceiver module 802 is configured to send the first adjustment model to a second apparatus, where the first adjustment model is used by the second apparatus to determine a second adjustment model used for the second transmitter.

Optionally, a neural network of the second adjustment model is an inverse neural network of a neural network of the first adjustment model.

When the communication apparatus 800 is used in another model training process, the processing module 801 is configured to obtain a signal used for model training, where the signal used for model training includes a fourth signal and a fifth signal, the fourth signal is a signal obtained by a second receiver by processing the fifth signal, the fifth signal is a signal obtained by a neural network model that participates in training by processing a signal obtained by a first transmitter by processing a sixth signal, and the sixth signal is a source signal; and train the neural network model based on a second training target to obtain a first adjustment model, where the second training target indicates to reduce, based on the fourth signal, a loss function of the neural network model that participates in training.

Optionally, the transceiver module 802 is configured to send the first adjustment model to a second apparatus, where the first adjustment model is used by the second apparatus to determine a second adjustment model used for the second transmitter.

Optionally, a neural network of the second adjustment model is an inverse neural network of a neural network of the first adjustment model.

When the communication apparatus 800 is used in another model training process, the processing module 801 is configured to obtain a signal used for model training, where the signal used for model training includes a seventh signal and an eighth signal, the seventh signal is a signal obtained by a first receiver by processing a signal obtained by a neural network model that participates in training by processing a ninth signal, the ninth signal is obtained by a second transmitter by processing a source signal, and the eighth signal is the source signal or is obtained by a second receiver by processing the ninth signal; and train the neural network model based on a third training target to obtain a first adjustment model, where the third training target indicates to reduce an error between the seventh signal and the eighth signal.

Optionally, the transceiver module 802 is configured to send the first adjustment model to the second apparatus, where the first adjustment model is used by the second apparatus to determine a third adjustment model used for the second receiver.

Optionally, a neural network of the third adjustment model is an inverse neural network of a neural network of the first adjustment model.

For understanding of the communication apparatus described in this embodiment of this application, refer to functions of the first apparatus in FIG. 3A to FIG. 7D. The communication apparatus may be a terminal device, or may be a network device.

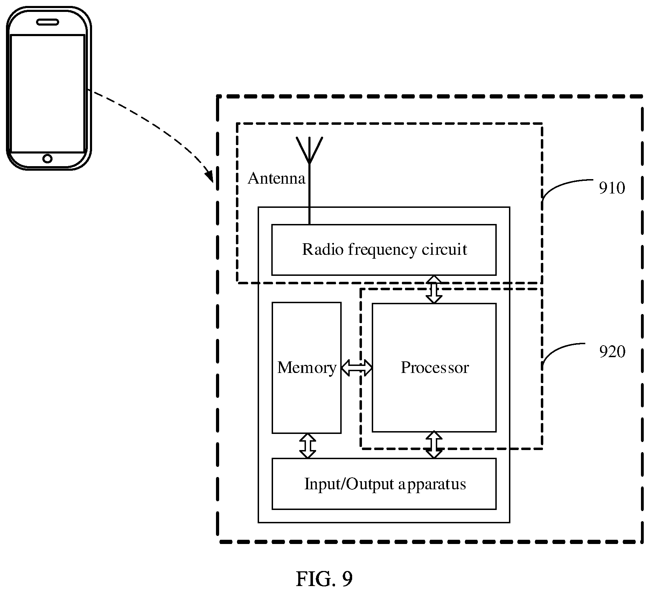

FIG. 9 is a diagram of a simplified structure of a terminal device when a communication apparatus is a terminal device. For ease of understanding and illustration, an example in which the terminal device is a mobile phone is used in FIG. 9. As shown in FIG. 9, the terminal device includes a processor, a memory, a radio frequency circuit, an antenna, and an input/output apparatus.

The processor is mainly configured to: process a communication protocol and communication data, control the terminal device, execute a software program, process data of the software program, and the like.

The memory is mainly configured to store the software program and data.

The radio frequency circuit is mainly configured to: perform conversion between a baseband signal and a radio frequency signal, and process the radio frequency signal.

The antenna is mainly configured to receive and send a radio frequency signal in a form of an electromagnetic wave.

The input/output apparatus, such as a touchscreen, a display, or a keyboard, is mainly configured to: receive data input by a user and output data to the user.

It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

For ease of description, FIG. 9 shows only one memory and one processor. In an actual terminal device product, there may be one or more processors and one or more memories. The memory may also be referred to as a storage medium, a storage device, or the like. The memory may be disposed independently of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 9, the terminal device includes a transceiver unit 910 and a processing unit 920. The transceiver unit may also be referred to as a transceiver, a transceiver machine, a transceiver apparatus, or the like. The processing unit may also be referred to as a processor, a processing board, a processing module, a processing apparatus, or the like.

Optionally, a component that is in the transceiver unit 910 and that is configured to implement a receiving function may be considered as a receiving unit, and a component that is in the transceiver unit 910 and that is configured to implement a sending function may be considered as a sending unit. In other words, the transceiver unit 910 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that, the transceiver unit 910 is configured to perform a sending operation and a receiving operation on the first apparatus in the foregoing method embodiments, and the processing unit 920 is configured to perform an operation other than the receiving operation and the sending operation of the first apparatus in the foregoing method embodiments.

When the terminal device is a chip, the chip includes a transceiver unit and a processing unit. The transceiver unit may be an input/output circuit or a communication interface. The processing unit is a processor, a microprocessor, an integrated circuit, or a logic circuit integrated on the chip.

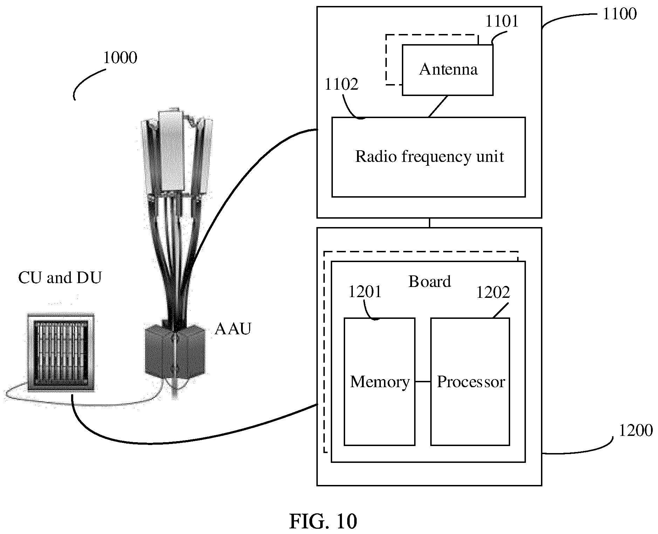

When the communication apparatus is a network device, FIG. 10 is a diagram of a structure of a network device 1000 according to an embodiment of this application. The network device 1000 may be applied to the system shown in FIG. 1 or FIG. 2. For example, the network device 1000 may be the network device in the system shown in FIG. 1 or FIG. 2, and is configured to perform a function of the first apparatus in the foregoing method embodiment. It should be understood that, the following is merely an example. In a future communication system, the network device may have another form and composition.

For example, in a 5G communication system, the network device 1000 may include a CU, a DU, and an AAU. Compared with a network device in an LTE communication system that includes one or more radio frequency units, for example, an RRU and one or more BBUs,

a non-real-time part of the original BBU is split off and redefined as the CU, which is responsible for processing a non-real-time protocol and service, some physical layer processing functions of the BBU are combined with the original RRU and a passive antenna into the AAU, and remaining functions of the BBU are redefined as the DU, which is responsible for processing a physical layer protocol and a real-time service. In short, the CU and the DU are distinguished based on real-time performance of processed content, and the AAU is a combination of the RRU and the antenna.

The CU, the DU, and the AAU may be deployed separately or together. Therefore, there may be a plurality of network deployment forms. A possible deployment form, as shown in FIG. 10, is consistent with that of a conventional 4G network device. The CU and the DU are deployed on same hardware. It should be understood that FIG. 10 is merely an example, and constitutes no limitation on the protection scope of this application. For example, a deployment form may alternatively be that DUs are deployed in a BBU equipment room, CUs or DUs are deployed together, or CUs are centralized at a higher level.

The AAU 1100 may implement a transceiver function, is referred to as a transceiver unit 1100, and corresponds to the transceiver module 802 in FIG. 8. Optionally, the transceiver unit 1100 may also be referred to as a transceiver machine, a transceiver circuit, a transceiver, or the like, and may include at least one antenna 1101 and a radio frequency unit 1102. Optionally, the transceiver unit 1100 may include a receiving unit and a sending unit. The receiving unit may correspond to a receiver (or referred to as a receiver machine or a receive circuit), and the sending unit may correspond to a transmitter (or referred to as a transmitter machine or a transmit circuit). The CU and DU 1200 may implement an internal processing function, are referred to as a processing unit 1200, and correspond to the processing module 801 in FIG. 8. Optionally, the processing unit 1200 may control the network device or the like, and may be referred to as a controller. The AAU, the CU, and the DU may be physically disposed together, or may be physically disposed separately.

In addition, the network device is not limited to the form shown in FIG. 10, and may alternatively be in another form. For example, the network device includes a BBU and an adaptive radio unit (adaptive radio unit, ARU), or includes a BBU and an AAU; or may be a customer premises equipment (customer premises equipment, CPE), or may be in another form. This is not limited in this application.

In an example, the processing unit 1200 may include one or more boards. A plurality of boards may jointly support a radio access network (such as an LTE network) of a single access standard, or may separately support radio access networks (such as an LTE network, a 5G network, a future network, or another network) of different access standards. The CU and DU 1200 further include a memory 1201 and a processor 1202. The memory 1201 is configured to store necessary instructions and necessary data. The processor 1202 is configured to control the network device to perform a necessary action, for example, is configured to control the network device to perform an operation procedure related to the network device in the foregoing method embodiments. The memory 1201 and the processor 1202 may serve the one or more boards. In other words, a memory and a processor may be disposed on each board. Alternatively, a plurality of boards may share a same memory and a same processor. In addition, a necessary circuit may be further disposed on each board.

It should be understood that, the network device 1000 shown in FIG. 10 can implement functions of the first apparatus in the method embodiments in FIG. 4A to FIG. 7D. Operations and/or functions of units in the network device 1000 are separately used to implement corresponding procedures performed by the first apparatus in the method embodiments of this application. To avoid repetition, detailed descriptions are appropriately omitted herein. The structure of the network device shown in FIG. 10 is merely a possible form, but shall not constitute any limitation on embodiments of this application. According to this application, there may be a network device structure in another form in the future.

The CU and DU 1200 may be configured to perform an action that is implemented by the first apparatus and that is described in the foregoing method embodiments, and the AAU 1100 may be configured to perform an action that is sent by the first apparatus to the second apparatus or received from the second apparatus and that is described in the foregoing method embodiments. For details, refer to the descriptions in the foregoing method embodiments. Details are not described herein again.

An embodiment of this application further provides a computer program product including instructions. When the computer program product is run on a computer, the computer is enabled to perform the methods in the embodiments shown in FIG. 4A to FIG. 7D.

An embodiment of this application further provides a computer-readable storage medium, including computer instructions. When the computer instructions are run on a computer, the computer is enabled to perform the methods in the embodiments shown in FIG. 4A to FIG. 7D.

An embodiment of this application further provides a chip apparatus, including a processor, configured to be connected to a memory, and invoke a program stored in the memory, to enable the processor to perform the methods in the embodiments shown in FIG. 4A to FIG. 7D.

The processor mentioned in any one of the foregoing descriptions may be a general-purpose central processing unit, a microprocessor, an application-specific integrated circuit (application-specific integrated circuit, ASIC), or one or more integrated circuits configured to control program execution of the methods in the embodiments shown in FIG. 4A to FIG. 4C. The memory mentioned in any one of the foregoing may be a read-only memory (read-only memory, ROM), another type of static storage device that can store static information and instructions, a random access memory (random access memory, RAM), or the like.

It may be clearly understood by a person skilled in the art that, for the purpose of convenient and brief description, for a detailed operating process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, a part that essentially contributes to the technical solutions of this application or all or a part of the technical solutions may be implemented in a form of a software product. The computer software product is stored in a storage medium, and includes several instructions for enabling a computer device (which may be a personal computer, a server, a network device, or the like) to perform all or a part of steps of the methods in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

Claims

1.  A communication method, comprising:

    determining, by a first apparatus, a first adjustment model based on first information from a second apparatus, wherein the first adjustment model is associated with information about a first transmitter and information about a second receiver, or the first adjustment model is associated with information about a first receiver and information about a second transmitter, the first transmitter and the first receiver correspond to the first apparatus, and the second receiver and the second transmitter correspond to the second apparatus; and

    communicating with, by the first apparatus, the second receiver of the second apparatus based on the first transmitter and the first adjustment model; or

    communicating with, by the first apparatus, the second transmitter of the second apparatus based on the first receiver and the first adjustment model.

2.  The method according to claim 1, wherein communicating with, by the first apparatus, the second receiver of the second apparatus based on the first transmitter and the first adjustment model comprises:

    processing, by the first apparatus, a to-be-sent signal based on the first transmitter, and then processing, based on the first adjustment model, a signal processed by the first transmitter; and

    sending, by the first apparatus to the second apparatus, a signal processed by the first adjustment model.

3.  The method according to claim 1 or 2, wherein communicating with, by the first apparatus, the second transmitter of the second apparatus based on the first receiver and the first adjustment model comprises:

    processing, by the first apparatus, a signal from the second transmitter of the second apparatus based on the first adjustment model; and

    processing, by the first apparatus based on the first receiver, the signal processed by the first adjustment model.

4.  The method according to any one of claims 1 to 3, wherein the first information comprises an identifier of the first adjustment model, and the identifier of the first adjustment model is used to determine the first adjustment model.

5.  The method according to any one of claims 1 to 3, wherein the first information comprises an identifier of the second receiver or an identifier of the second transmitter; and

    the identifier of the second receiver or the identifier of the second transmitter is used to determine an identifier of the first adjustment model.

6.  The method according to claim 5, wherein the identifier of the first adjustment model is determined by the first apparatus from a first identifier group based on an identifier of the first transmitter and the identifier of the second receiver, and the first identifier group comprises the identifier of the first transmitter, the identifier of the second receiver, and the identifier of the first adjustment model; or

    the identifier of the first adjustment model is determined by the first apparatus from a second identifier group based on an identifier of the first receiver and the identifier of the second transmitter, and the second identifier group comprises the identifier of the second transmitter, the identifier of the first receiver, and the identifier of the first adjustment model.

7.  The communication method according to any one of claims 1 to 6, wherein before determining, by the first apparatus, the first adjustment model based on the first information from the second apparatus, the method further comprises: training, by the first apparatus, a neural network model based on a first training target to obtain the first adjustment model, wherein the first training target indicates to reduce an error between a first signal and a second signal, the first signal is a signal obtained by the neural network model that participates in training by processing a signal obtained by the first transmitter by processing a third signal, the second signal is a signal obtained by the second transmitter by processing the third signal, and the third signal is a source signal.

8.  The communication method according to any one of claims 1 to 6, wherein before determining, by the first apparatus, the first adjustment model based on the first information from the second apparatus, the method further comprises: training, by the first apparatus, a neural network model based on a second training target to obtain the first adjustment model, wherein the second training target indicates to reduce, based on a fourth signal, a loss function of the neural network model that participates in training, the fourth signal is a signal obtained by the second receiver by processing a fifth signal, the fifth signal is a signal obtained by the neural network model that participates in training by processing a signal obtained by the first transmitter by processing a sixth signal, and the sixth signal is a source signal.

9. The communication method according to any one of claims 1 to 6, wherein before determining, by the first apparatus, the first adjustment model based on the first information from the second apparatus, the method further comprises: training, by the first apparatus, a neural network model based on a third training target to obtain the first adjustment model, wherein the third training target indicates to reduce an error between a seventh signal and an eighth signal, the seventh signal is a signal obtained by the first receiver by processing a signal obtained by the neural network model that participates in training by processing a ninth signal, the ninth signal is obtained by the second transmitter by processing a source signal, and the eighth signal is the source signal or is obtained by the second receiver by processing the ninth signal.

10. The communication method according to claim 7 or 8, wherein the method further comprises:
sending, by the first apparatus, the first adjustment model to the second apparatus, wherein the first adjustment model is used by the second apparatus to determine a second adjustment model used for the second transmitter.

11. The method according to claim 10, wherein a neural network of the second adjustment model is an inverse neural network of a neural network of the first adjustment model.

12. The communication method according to claim 9, wherein the method further comprises:
sending, by the first apparatus, the first adjustment model to the second apparatus, wherein the first adjustment model is used by the second apparatus to determine a third adjustment model used for the second receiver.

13. The communication method according to claim 12, wherein a neural network of the third adjustment model is an inverse neural network of a neural network of the first adjustment model.

14. The communication method according to any one of claims 1 to 13, wherein if there are a plurality of first adjustment models, and the plurality of first adjustment models are connected in parallel,

each of the first adjustment models that are connected in parallel is used by the first transmitter to communicate with a different second receiver; or
each of the first adjustment models that are connected in parallel is used by the first receiver to communicate with a different second transmitter.

15. The communication method according to claims 1 to 13, wherein if there are a plurality of first adjustment models, and the plurality of first adjustment models are connected in series,

at least two first adjustment models that are directly connected and that are connected in series are used by the first transmitter to communicate with different second receivers; or
at least two first adjustment models that are directly connected and that are connected in series are used for the first receiver to communicate with different second transmitters.

16. A model training method, comprising:

obtaining, by a first apparatus, a signal used for model training, wherein the signal used for model training comprises a first signal and a second signal, the first signal is a signal obtained by the neural network model that participates in training by processing a signal obtained by a first transmitter by processing a third signal, the second signal is a signal obtained by a second transmitter by processing the third signal, and the third signal is a source signal; and
training, by the first apparatus, the neural network model based on a first training target to obtain a first adjustment model, wherein the first training target indicates to reduce an error between the first signal and the second signal.

17. The method according to claim 16, wherein the method further comprises:
sending, by the first apparatus, the first adjustment model to a second apparatus, wherein the first adjustment model is used by the second apparatus to determine a second adjustment model used for the second transmitter.

18. The method according to claim 17, wherein a neural network of the second adjustment model is an inverse neural network of a neural network of the first adjustment model.

19. A model training method, comprising:

   obtaining, by a first apparatus, a signal used for model training, wherein the signal used for model training comprises a fourth signal and a fifth signal, the fourth signal is a signal obtained by a second receiver by processing the fifth signal, the fifth signal is a signal obtained by the neural network model that participates in training by processing a signal obtained by a first transmitter by processing a sixth signal, and the sixth signal is a source signal; and
   training, by the first apparatus, the neural network model based on a second training target to obtain a first adjustment model, wherein the second training target indicates to reduce, based on the fourth signal, a loss function of the neural network model that participates in training.

20. The method according to claim 19, wherein the method further comprises:
   sending, by the first apparatus, the first adjustment model to a second apparatus, wherein the first adjustment model is used by the second apparatus to determine a second adjustment model used for a second transmitter.

21. The method according to claim 20, wherein a neural network of the second adjustment model is an inverse neural network of a neural network of the first adjustment model.

22. A model training method, comprising:

   obtaining, by a first apparatus, a signal used for model training, wherein the signal used for model training comprises a seventh signal and an eighth signal, the seventh signal is a signal obtained by a first receiver by processing a signal obtained by the neural network model that participates in training by processing a ninth signal, the ninth signal is obtained by a second transmitter by processing a source signal, and the eighth signal is the source signal or is obtained by a second receiver by processing the ninth signal; and
   training, by the first apparatus, the neural network model based on a third training target to obtain a first adjustment model, wherein the third training target indicates to reduce an error between the seventh signal and the eighth signal.

23. The method according to claim 22, wherein the method further comprises:
   sending, by the first apparatus, the first adjustment model to a second apparatus, wherein the first adjustment model is used by the second apparatus to determine a third adjustment model used for the second receiver.

24. The method according to claim 23, wherein a neural network of the third adjustment model is an inverse neural network of a neural network of the first adjustment model.

25. A communication apparatus, comprising a transceiver module and a processing module, wherein

   the transceiver module is configured to perform a sending step or a receiving step in the method according to any one of claims 1 to 24; and
   the processing module is configured to perform a step other than the sending step and the receiving step in the method according to any one of claims 1 to 24.

26. A communication apparatus, comprising at least one processor coupled to a memory, wherein

   the memory is configured to store a program or instructions; and
   the at least one processor is configured to execute the program or the instructions, to enable the apparatus to implement the method according to any one of claims 1 to 24.

27. A computer program product comprising program instructions, wherein when the program instructions are run on a computer, the computer is enabled to perform the method according to any one of claims 1 to 24.

28. A computer-readable storage medium, wherein the computer-readable storage medium stores program instructions; and when the program instructions are run, the method according to any one of claims 1 to 24 is performed.

FIG. 1

FIG. 2

FIG. 3A

FIG. 3B

| First apparatus | | Second apparatus |
|---|---|---|

401: Obtain a signal used for model training

401a: Third signal

401b: Second signal

401c: Process the third signal based on a first transmitter, and then process, by using a neural network model that participates in training, the third signal processed by the first transmitter, to obtain a first signal

402: Train the neural network model based on a first training target to obtain a first adjustment model, where the first training target indicates to reduce an error between the first signal and the second signal

403: First adjustment model

404: Determine a second adjustment model based on the first adjustment model

FIG. 4A

```
┌──────────┐                                          ┌──────────┐
│  First   │                                          │  Second  │
│ apparatus│                                          │ apparatus│
└────┬─────┘                                          └────┬─────┘
     │                                                     │
┌────┼────────────────────────────────────────────┐       │
│ 411: Obtain a signal used for model training     │       │
│    ┌─────────────────────────────────────────┐   │       │
│    │ 411a: Process a sixth signal based on a  │   │       │
│    │  first transmitter, and then process,    │   │       │
│    │  by using a neural network model that    │   │       │
│    │  participates in training, the sixth     │   │       │
│    │  signal processed by the first           │   │       │
│    │  transmitter, to obtain a fifth signal   │   │       │
│    └─────────────────────────────────────────┘   │       │
│             411b: Fifth signal                    │       │
│                                                   │       │
│             411c: Fourth signal                   │       │
└───────────────────────────────────────────────────┘      │
```

411: Obtain a signal used for model training

411a: Process a sixth signal based on a first transmitter, and then process, by using a neural network model that participates in training, the sixth signal processed by the first transmitter, to obtain a fifth signal

411b: Fifth signal

411c: Fourth signal

412: Train the neural network model based on a second training target to obtain a first adjustment model, where the second training target indicates to reduce, based on the fourth signal, a loss function of the neural network model participating in training

413: First adjustment model

414: Determine a second adjustment model based on the first adjustment model

FIG. 4B

First
apparatus

Second
apparatus

421: Obtain a signal
used for model training

421a: Eighth signal and
ninth signal

421b: Process the ninth signal based on a neural
network model that participates in training, and
then process, based on a first receiver, a signal
obtained by the neural network by processing the
ninth signal, to obtain a seventh signal

422: Train the neural network model based on a third
training target to obtain a first adjustment model, where
the third training target indicates to reduce an error
between the seventh signal and the eighth signal

423: First adjustment model

424: Determine a third adjustment model
based on the first adjustment model

FIG. 4C

$x_1$

$\times$ $+$

$z_1$

$v_1(.,\theta_1)$ $u_1(.,\phi_1)$ $v_2(.,\theta_2)$ $u_2(.,\phi_2)$

$x_2$

$\times$ $+$

$z_2$

FIG. 5A

FIG. 5B

FIG. 5C

```
┌──────────┐                                                    ┌──────────┐
│  First   │                                                    │  Second  │
│apparatus │                                                    │apparatus │
└────┬─────┘                                                    └────┬─────┘
     │         601a: Information about a                              │
     │              first transmitter                                │
     │ - - - - - - - - - - - - - - - - - - - - - - - - - - - - - - ->│
     │            601: First information                             │
     │<──────────────────────────────────────────────────────────── │
```

602: Determine a first adjustment model
based on the first information, where the
first adjustment model is associated with
the information about the first transmitter
and information about a second receiver

```
     │         603: Communicate with the second                      │
     │         receiver based on the first transmitter               │
     │            and the first adjustment model                      │
     │ ──────────────────────────────────────────────────────────-> │
     │                                                                │
```

FIG. 6A

```
┌──────────┐                                                    ┌──────────┐
│  First   │                                                    │  Second  │
│apparatus │                                                    │apparatus │
└────┬─────┘                                                    └────┬─────┘
     │         611a: Information about a                              │
     │              first receiver                                   │
     │ - - - - - - - - - - - - - - - - - - - - - - - - - - - - - - ->│
     │            611: First information                             │
     │<──────────────────────────────────────────────────────────── │
```

612: Determine a first adjustment model
based on the first information, where the
first adjustment model is associated with
the information about the first receiver and
information about a second transmitter

```
     │         613: Communicate with the second                      │
     │         transmitter based on the first receiver               │
     │            and the first adjustment model                      │
     │ ──────────────────────────────────────────────────────────-> │
     │                                                                │
```

FIG. 6B

FIG. 7A

FIG. 7B

FIG. 7C

FIG. 7D

FIG. 8

Antenna

Radio frequency circuit

910

Memory

Processor

920

Input/Output apparatus

FIG. 9

EP 4 622 189 A1

FIG. 10

37

## INTERNATIONAL SEARCH REPORT

| International application No. |
| --- |
| **PCT/CN2022/137221** |

**A. CLASSIFICATION OF SUBJECT MATTER**

H04L25/03(2006.01)i

According to International Patent Classification (IPC) or to both national classification and IPC

**B. FIELDS SEARCHED**

Minimum documentation searched (classification system followed by classification symbols)

IPC: H04L H04B

Documentation searched other than minimum documentation to the extent that such documents are included in the fields searched

Electronic data base consulted during the international search (name of data base and, where practicable, search terms used)

CNTXT; WPABS; WPABSC; VEN; ENTXT; ENTXTC; CJFD: 发送, 发射, 接收, 机, 设备, 装置, 匹配, 适配, 调整, 模型, 神经网络, 训练, 不同, 产商, 无法, 通信, send, transmitter, receive, device, apparatus, match, adapt, adjust, model, neural network, train, different, manufacturer, cannot, communication

**C. DOCUMENTS CONSIDERED TO BE RELEVANT**

| Category* | Citation of document, with indication, where appropriate, of the relevant passages | Relevant to claim No. |
| --- | --- | --- |
| X | CN 112054863 A (HUAWEI TECHNOLOGIES CO., LTD.) 08 December 2020 (2020-12-08) description, paragraphs 62-88, and figure 5 | 1-13, 16-28 |
| Y | CN 112054863 A (HUAWEI TECHNOLOGIES CO., LTD.) 08 December 2020 (2020-12-08) description, paragraphs 62-88, and figure 5 | 14-15 |
| Y | US 2019319659 A1 (BOOZ ALLEN HAMILTON INC.) 17 October 2019 (2019-10-17) description, column 8, lines 28-32, and figure 2 | 14-15 |
| A | CN 114679355 A (HUAWEI TECHNOLOGIES CO., LTD.) 28 June 2022 (2022-06-28) entire document | 1-28 |
| A | US 2022014398 A1 (BOARD OF REGENTS, THE UNIVERSITY OF TEXAS SYSTEM) 13 January 2022 (2022-01-13) entire document | 1-28 |
| A | WO 2021103801 A1 (HUAWEI TECHNOLOGIES CO., LTD.) 03 June 2021 (2021-06-03) entire document | 1-28 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 July 2023** | **05 August 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/137221**

| Patent document cited in search report | | | Publication date (day/month/year) | Patent family member(s) | | | Publication date (day/month/year) |
|---|---|---|---|---|---|---|---|
| CN | 112054863 | A | 08 December 2020 | CN | 112054863 | B | 21 December 2021 |
| US | 2019319659 | A1 | 17 October 2019 | US | 11509339 | B2 | 22 November 2022 |
| | | | | WO | 2019200059 | A1 | 17 October 2019 |
| | | | | US | 2019319658 | A1 | 17 October 2019 |
| | | | | US | 10944440 | B2 | 09 March 2021 |
| CN | 114679355 | A | 28 June 2022 | WO | 2022135446 | A1 | 30 June 2022 |
| US | 2022014398 | A1 | 13 January 2022 | US | 11575544 | B2 | 07 February 2023 |
| | | | | WO | 2020092391 | A1 | 07 May 2020 |
| WO | 2021103801 | A1 | 03 June 2021 | CN | 112865999 | A | 28 May 2021 |
| | | | | CN | 112865999 | B | 09 August 2022 |

Form PCT/ISA/210 (patent family annex) (July 2022)